# EUROPÄISCHE PATENTSCHRIFT

(11) **EP 3 352 628 B1**
(45) Veröffentlichungstag und Bekanntmachung des Hinweises auf die Patenterteilung: **11.12.2019**
(21) Anmeldenummer: 16781069.6
(22) Anmeldetag: 23.09.2016
(51) Int. Cl.: A47J 31/057, A47J 31/46, A47J 31/52

(54) **VERFAHREN ZUM ERZEUGEN EINES KAFFEEGETRÄNKS IN EINER BRÜHVORRICHTUNG EINES KAFFEEAUTOMATEN SOWIE KAFFEEAUTOMAT ZUM DURCHFÜHREN DES VERFAHRENS**
METHOD FOR CREATING A COFFEE DRINK IN A BREWING DEVICE OF A COFFEE MACHINE AND COFFEE MACHINE FOR CARRYING OUT THE METHOD
PROCÉDÉ DE FABRICATION D'UN CAFÉ DANS UN DISPOSITIF D'ÉBOUILLANTAGE D'UN AUTOMATE À CAFÉ ET AUTOMATE À CAFÉ DESTINÉ À EXÉCUTER LEDIT PROCÉDÉ

(30) Priorität: 24.09.2015 EP 15405057
(43) Veröffentlichungstag der Anmeldung: 01.08.2018
(73) Patentinhaber: JURA Elektroapparate AG, 4626 Niederbuchsiten (CH)
(72) Erfinder: SAHLI, Georg, 3423 Ersigen (CH); PROBST, Stephan, 4573 Lohn-Ammannsegg (CH); BÜTTIKER, Philipp, 4625 Oberbuchsiten (CH); STUDER, Reinhard, 4625 Oberbuchsiten (CH)
(74) Vertreter: EGLI-EUROPEAN PATENT ATTORNEYS
(86) Internationale Anmeldenummer: PCT/EP2016/072693
(87) Internationale Veröffentlichungsnummer: WO 2017/050968

(56) Entgegenhaltungen:
- EP-A1- 2 570 056
- EP-A1- 2 570 056
- US-A- 6 095 031
- US-A- 6 095 031
- US-A1- 2005 166 765
- US-A1- 2005 166 765

## Beschreibung

Die vorliegende Erfindung betrifft ein Verfahren zum Erzeugen eines Kaffeegetränks in einer Brühvorrichtung eines Kaffeeautomaten sowie einen Kaffeeautomaten zum Durchführen des Verfahrens zum Erzeugen eines Kaffeegetränks in einer Brühvorrichtung.

Insbesondere betrifft die Erfindung ein Verfahren, bei welchem das Zuführen von Brühwasser zu einer Brühkammer der Brühvorrichtung in Abhängigkeit von einer Brühwasser-Kenngrösse impulsweise erfolgt.

Es sind Verfahren zum Erzeugen von Kaffeegetränken bekannt, bei welchen die Brühwasserpumpe eines Kaffeeautomaten, welcher zum Durchführen solcher herkömmlicher Verfahren eingerichtet ist, mit elektrischen Impulsen angesteuert wird. Aus der europäischen Patentanmeldung EP 2 570 056 A1 ist beispielsweise ein solches Verfahren bekannt. Eine Brühkammer des Kaffeeautomaten ist mit einem Cremaventil ausgestattet, welches mechanisch mittels einer Feder vorgespannt ist und im Normalzustand den Auslass der Brühkammer verschliesst. Brühwasser kann mit einem Druck von 5 bar oder mehr in die mit Kaffeepulver befüllte Brühkammer eingeleitet werden. Beim Überschreiten eines bestimmten Drucks innerhalb der Brühkammer wirkt dieser Überdruck auch auf das Cremaventil. Dieses wird entgegen der Richtung der Vorspannkraft der Feder gedrückt und gibt dadurch einen Durchlassspalt frei. Weitere Stand der Technik Dokumente zu diesem Gebiet sind bspw. US 2005/166765, US 6095031.

Zum Aufbauen des notwendigen Brühkammerdrucks kommt bei der EP 2 570 056 A1 eine Brühwasserpumpe zum Einsatz, beispielsweise eine Schwingkolbenpumpe. Diese Brühwasserpumpe kann gezielt mit einem pulsmodulierten Signal angesteuert werden. Hierbei wird mehrfach in schneller zeitlicher Abfolge zwischen dem Pumpenstillstand und dem vollen Wirkbetrieb der Pumpe umgeschaltet. Wie aus der EP 2 570 056 A1 weiter hervorgeht, dient dieser gepulste Betrieb der Brühwasserpumpe dazu, die effektive Förderleistung der Brühwasserpumpe zu reduzieren, um ein abruptes Öffnen des Cremaventils zu vermeiden. Der aus der EP 2 570 056 A1 bekannte gepulste Betrieb erfolgt also gemäss dem Prinzip einer zeitlichen Pulsmodulation, um die Pumpleistung zu drosseln. In dem aus der EP 2 570 056 A1 bekannten Verfahren ist es vorgesehen, dass das Brühwasser während eines Brühvorganges in jedem Fall mit im Zeitverlauf unterschiedlichen Volumenströmen zugeführt wird. Zumindest für einen dieser Volumenströme, der niedriger ist als die maximale Förderleistung der Brühwasserpumpe, ist es daher in jedem Brühvorgang zumindest während eines Teilzeitraums vorgesehen, dass die Brühwasserpumpe zeitlich pulsmoduliert angesteuert wird, um die Pumpleistung auf diesen niedrigeren Volumenstrom zu drosseln.

Des Weiteren ist die europäische Patentanmeldung EP 2 213 957 A2 auf ein Heizsystem für ein Gerät zur Heissgetränkzubereitung gerichtet, wobei das Heizsystem unter anderem eine Pumpe aufweist. In der EP 2 213 957 A2 wird auch von einem funktionalen Zusammenhang, beispielsweise von einem linearen Zusammenhang, zwischen der Fördermenge der Pumpe und der ihr zugeführten Leistung ausgegangen. Die aus der EP 2 213 957 A2 bekannte Lösung sieht u. a. vor, dass die Pumpe aufgrund dieses funktionalen Zusammenhangs zusätzlich als indirekter Durchflussmesser fungiert. Ein zusätzlich vorgesehener separater Durchflussmesser dient dazu, die Funktion der Pumpe zu überwachen, also z. B. um einen Ausfall der Pumpe zu detektieren.

Das europäische Patent EP 1 955 624 B1 offenbart eine Kaffeemaschine, die auf veränderliche Mahlgrade von Kaffeemehl reagieren kann. In der Druckschrift EP 1 955 624 B1 wurde erkannt, dass die Durchflussrate durch das Kaffeemehl einen Einfluss auf den Geschmack des zubereiteten Kaffeegetränks haben kann, und die bekannte Kaffeemaschine weist konsequenterweise einen Durchflussmengenmesser auf. Die damit während eines Zubereitungsvorgangs erfasste Durchflussmenge bzw. eine daraus abgeleitete Grösse wird bei der EP 1 955 624 B1 nur informativ an eine Bedienperson der Kaffeemaschine ausgegeben. Die Bedienperson kann anhand der angezeigten Daten den Mahlgrad der Kaffeebohnen verstellen, wobei in der EP 1 955 624 B1 gleichzeitig darauf hingewiesen wird, dass bei einer zu feinen Mahlgradeinstellung eine Verstopfung der Brühvorrichtung droht.

Aus der europäischen Patentanmeldung EP 0 245 197 A2 ist ein Verfahren zum Zubereiten von Kaffee bekannt, wobei eine automatisch verstellbare Mahleinheit zum Mahlen der Kaffeebohnen und zum Befüllen einer Brühkammer der Maschine verwendet wird. Eine vorgegebene Menge an Brühwasser wird in die Brühkammer eingeleitet, und die Durchlaufzeit der bestimmten Menge durch das Kaffeepulver wird gemessen. Anhand eines Vergleichs mit einer Soll-Durchlaufzeit wird der Mahlgrad der Mahleinheit automatisch verstellt.

Der Mahlgrad des Mahlgutes, also in der Regel der Mahlgrad des Kaffeemehls, kann einen Einfluss auf die gustatorischen Eigenschaften des erzeugten Kaffeegetränks haben. Vor allem ist es möglich, dass der optimale Mahlgradbereich bei unterschiedlichen Arten von Kaffeegetränken variiert. So ist man oft bestrebt, bei einem Espresso die Kaffeebohnen zu eher feinem Kaffeemehl zu verarbeiten (feiner Mahlgrad), während z. B. bei einem Kaffee amerikanischer Zubereitungsart ein gröberer Mahlgrad wünschenswert ist.

Typischerweise wird von einem eher feinen Mahlgrad ausgegangen, wenn im Mahlgut eine Korngrösse (Partikelgrösse) von mehr als 500 µm mit einem Kornanteil von weniger als 25 Gewichts-% vorkommt. Analog wird von einem eher groben Mahlgrad ausgegangen, wenn im Mahlgut eine Korngrösse von mehr als 500 µm mit einem Kornanteil von 25 Gewichts-% oder mehr vorkommt. Diese Angaben sind jedoch nur beispielhaft zu verstehen und nicht als einschränkend auszulegen.

Um ein optimales geschmackliches Ergebnis zu erzielen, kann nun eine möglichst feine Mahlung des Mahlgutes wünschenswert sein.

Die bekannten Verfahren und Vorrichtungen weisen den Nachteil auf, dass insbesondere bei sehr feiner Mahlung des Kaffeepulvers, das sich während des Brühvorganges in der Brühkammer befindet, der Wasserdruck, der zum Durchdringen dieses Kaffeepulvers erforderlich ist, sehr gross wird. Dies kann zum einen unerwünscht sein, da die Qualität des zubereiteten Kaffeegetränks dadurch sinken kann; es können sich beispielsweise geschmackliche oder sonstige Beeinträchtigungen ergeben, wenn der Brühdruck zu hoch ist.

Zum anderen ist es jedoch auch möglich, dass der maximal von der Brühwasserpumpe aufbringbare Pumpendruck nicht ausreicht, um solch fein gemahlenes und damit dicht pressbares Kaffeepulver überhaupt zu durchdringen. Es sind herkömmliche Kaffeeautomaten bekannt, welche eine Überwachung des Pumpendrucks und/oder eine Durchflussüberwachung des Brühwassers durchführen. Stellen solche herkömmlichen Kaffeeautomaten fest, dass der Pumpendruck über einen Schwellenwert ansteigt bzw. dass eine minimale Durchflussmenge an Brühwasser unterschritten wird, dann brechen sie den Brühvorgang ab und werfen ggf. das gemahlene und gepresste Kaffeemehl ungenutzt in einen Abwurfbehälter aus.

Der vorliegenden Erfindung liegt die Aufgabe zugrunde, die genannten Nachteile zu vermeiden, und insbesondere ein Verfahren zum Erzeugen eines Kaffeegetränkes in einer Brühvorrichtung oder einen Kaffeeautomaten zum Durchführen des Verfahrens anzugeben, mit welchem jeweils eine hohe Qualität eines durch den Brühvorgang erhaltenen Kaffeegetränks erzielt werden kann, und zwar bei stark unterschiedlichen Mahlgraden des Mahlguts.

Diese Aufgabe wird gelöst durch ein Verfahren mit den Merkmalen des Patentanspruches 1 bzw. durch einen Kaffeeautomaten mit den Merkmalen des Patentanspruches 8.

Die Brühvorrichtung eines Kaffeeautomaten zum Durchführen des erfindungsgemässen Verfahrens weist eine Brühkammer zum Aufnehmen von Mahlgut auf. Das Mahlgut ist insbesondere gemahlener Kaffee, der beispielsweise bei einem Kaffee-Vollautomaten von einem Mahlwerk der Brühkammer automatisch zugeführt wird. Die Brühkammer weist einen Brühwassereinlass auf, welchem Brühwasser zugeführt werden kann. Zudem weist die Brühkammer einen Kammerauslass auf, aus welchem die Extraktionsflüssigkeit austritt, die durch das Durchlaufen des Brühwassers durch die mit dem Mahlgut gefüllte Brühkammer entsteht.

Das erfindungsgemässe Verfahren weist dabei einen Verfahrensschritt auf, in welchem während eines ersten Zuführungszeitraums unter einem Druck stehendes Brühwasser an den Brühwassereinlass zugeführt wird, und zwar gemäss einem ersten Brühwasser-Zuführungsmodus, in welchem das Brühwasser kontinuierlich an den Brühwassereinlass zugeführt wird. Das Verfahren weist ausserdem die folgenden weiteren Verfahrensschritte auf, die während eines zweiten Zuführungszeitraums ausgeführt werden:
- Ermitteln einer Brühwasser-Kenngrösse, die mit dem Volumenstrom und/oder mit dem Druck des an den Brühwasser-einlass zugeführten Brühwassers zusammenhängt, und Einstellen, unter Verwendung der Brühwasser-Kenngrösse, einer Modus-Einstellgrösse für einen zweiten Brühwasser-Zuführungsmodus;
- Zuführen von Brühwasser an den Brühwassereinlass gemäss dem zweiten Brühwasser-Zuführungsmodus.

Die Modus-Einstellgrösse definiert zumindest einen kontinuierlichen Modus für den zweiten Brühwasser-Zuführungsmodus und einen Impulsmodus für den zweiten Brühwasser-Zuführungsmodus, wobei in dem kontinuierlichen Modus für den zweiten Brühwasser-Zuführungsmodus das Brühwasser kontinuierlich an den Brühwassereinlass zugeführt wird, und wobei in dem Impulsmodus für den zweiten Brühwasser-Zuführungsmodus das Brühwasser impulsweise an den Brühwassereinlass zugeführt wird. Das Einstellen der Modus-Einstellgrösse für den zweiten Brühwasser-Zuführungsmodus umfasst zumindest eine Auswahl zwischen dem kontinuierlichen Modus für den zweiten Brühwasser-Zuführungsmodus und dem Impulsmodus für den zweiten Brühwasser-Zuführungsmodus. Diese Auswahl erfolgt in Abhängigkeit von der Brühwasser-Kenngrösse.

Erfindungsgemäss umfasst die zumindest eine Auswahl zwischen dem kontinuierlichen Modus für den zweiten Brühwasser-Zuführungsmodus und dem Impulsmodus für den zweiten Brühwasser-Zuführungsmodus mindestens einen der folgenden Schritte:
- Messen eines Drucks des an den Brühwassereinlass zugeführten Brühwassers am Brühwassereinlass und Auswählen des Impulsmodus oder des kontinuierlichen Modus für den zweiten Brühwasser-Zuführungsmodus in Abhängigkeit von dem gemessenen Druck, wobei der Impulsmodus gewählt wird, wenn der gemessene Druck am Brühwasser-Einlass einen vorab festgelegten oder festlegbaren Druck-Schwellenwert überschreitet, und der kontinuierliche Modus gewählt wird, wenn der gemessene Druck am Brühwasser-Einlass einen vorab festgelegten oder festlegbaren Druck-Schwellenwert unterschreitet; und/oder
- Messen eines Volumenstroms des an den Brühkammer-Einlass zugeführten Brühwassers und/oder eines Volumenstroms einer aus dem Kammerauslass austretenden Flüssigkeit und Auswählen des Impulsmodus oder des kontinuierlichen Modus für den zweiten Brühwasser-Zuführungsmodus in Abhängigkeit von dem gemessenen Volumenstrom des an den Brühkammer-Einlass zugeführten Brühwassers und/oder dem gemessenen Volumenstrom der aus dem Kammerauslass austretenden Flüssigkeit, wobei der Impulsmodus ausgewählt wird, wenn der gemessene Volumenstrom des an den Brühkammer-Einlass zugeführten Brühwassers und/oder der gemessene Volumenstrom der aus dem Kammerauslass austretenden Flüssigkeit einen vorab festgelegten oder festlegbaren Volumenstrom-Schwellenwert unterschreitet bzw. unterschreiten, und der kontinuierlichen Modus gewählt wird, wenn der gemessene Volumenstrom des an den Brühkammer-Einlass zugeführten Brühwassers und/oder der gemessene Volumenstrom der aus dem Kammerauslass austretenden Flüssigkeit einen vorab festgelegten oder festlegbaren Volumenstrom-Schwellenwert überschreitet bzw. überschreiten.

Es versteht sich, dass der zweite Brühwasser-Zuführungsmodus gemäss der Einstellung der Modus-Einstellgrösse durchgeführt wird.

"Volumenstrom des geförderten bzw. zugeführten Brühwassers" bezeichnet in diesem Zusammenhang die jeweils in einer vorgegebenen Zeiteinheit geförderte bzw. zugeführte Menge Brühwasser pro Zeiteinheit.

In Abhängigkeit von der ermittelten Brühwasser-Kenngrösse, die mit dem Volumenstrom und/oder mit dem Druck des geförderten Brühwassers zusammenhängt, wird bei dem erfindungsgemässen Verfahren also bestimmt, ob das Zuführen von Brühwasser gemäss dem zweiten Brühwasser-Zuführungsmodus zumindest zeitweise im Impulsmodus durchgeführt wird.

Insbesondere wird in Abhängigkeit von mindestens einem ermittelten Messwert (beispielsweise für einen Druck des an den Brühwassereinlass zugeführten Brühwassers am Brühwassereinlass, für einen Volumenstrom des an den Brühkammer-Einlass zugeführten Brühwassers und/oder einen Volumenstrom einer aus dem Kammerauslass austretenden Flüssigkeit) bestimmt, ob das Zuführen von Brühwasser gemäss dem zweiten Brühwasser-Zuführungsmodus zumindest zeitweise im Impulsmodus durchgeführt wird. Dies ermöglicht es, das Zuführen des Brühwassers während des Erzeugens eines Kaffeegetränks in der Brühkammer in Abhängigkeit von den jeweils ermittelten Messwerten (beispielsweise automatisch mittels einer entsprechenden Steuereinheit des Kaffeeautomaten) zu steuern und im Hinblick auf unterschiedliche Bedingungen beim Brühen von Kaffeegetränken geeignet zu variieren (durch die jeweilige Auswahl des kontinuierlichen Modus oder des Impulsmodus für den zweiten Brühwasser-Zuführungsmodus).

Bei dem erfindungsgemässen Verfahren folgt der zweite Zuführungszeitraum auf den ersten Zuführungszeitraum. Ausserdem bezieht sich das hierin beschriebene Verfahren auf jeweils einen Erzeugungsvorgang (Brühvorgang) des Kaffeegetränks, d. h. das Verfahren wird während jeweils eines Getränkebezugs durchgeführt. Dies schliesst nicht aus, dass zum endgültigen Zubereiten des Kaffeegetränks weitere Schritte erfolgen können, beispielsweise ein Schritt, in welchem Kaffeemehl durch Mahlen erzeugt wird, das Kaffeemehl in die Brühkammer eingebracht wird und/oder gepresst wird, und dergleichen. Ausserdem ist es selbstverständlich möglich, dass das Verfahren bei unterschiedlichen Brühvorgängen, beispielsweise bei aufeinanderfolgenden Brühvorgängen in einem Kaffee-Vollautomaten, unterschiedlich durchgeführt wird, z. B. mit unterschiedlichen Verfahrensparametern.

Unter einem Impulsmodus eines Flüssigkeitstransports, beispielsweise einer Brühwasser-Zufuhr, wird ein Modus verstanden, in welchem die Flüssigkeit intervallweise transportiert wird, also eine impulsweise Zufuhr erfolgt. Ein solcher intervallweiser Flüssigkeitstransport kann beispielsweise dadurch erzielt werden, dass eine für die Beförderung der Flüssigkeit zum Einsatz kommende Pumpe wechselweise ein- und ausgeschaltet wird, also getaktet betrieben wird. Die Impulse sind bei dem Impulsmodus des Flüssigkeitstransports derart ausgestaltet, dass die geförderte Flüssigkeit einen Stoss auf das in der Brühkammer befindliche Mahlgut ausübt und/oder das in der Brühkammer befindliche Mahlgut in eine gewisse Schwingung versetzt. Insbesondere sind also die Zuführungspausen der Impulse ausreichend lang, um den Flüssigkeitstransport kurzzeitig zu unterbrechen. Ausreichend lang sind beispielsweise Zuführungspausen von mehr als 0,05 Sekunden oder von mehr als 0,1 Sekunden. Im Rahmen der hierin beschriebenen Erfindung wird ein impulsweises Zuführen ausserdem so verstanden, dass der Impulsmodus eine gewisse Mindestanzahl an Impulsen aufweist, beispielsweise mehr als drei Impulse oder mehr als fünf Impulse.

Unter einem kontinuierlichen Modus für den zweiten Brühwasser-Zuführungsmodus wird ein Modus verstanden, in welchem das Brühwasser ungepulst zugeführt wird. Ein ungepulstes Zuführen, also ein kontinuierlicher Zuführbetrieb bzw. Dauerstrichbetrieb, unterscheidet sich dahingehend von dem oben beschriebenen Impulsmodus, dass auf das Mahlgut in der Brühkammer durch das an den Brühwasser-Einlass zugeführte Brühwasser keine oder nur sehr geringfügige impulsartige Stösse entsprechend der oben erwähnten Mindestanzahl an Impulsen ausgeübt werden. Insbesondere wird im Rahmen dieser Erfindung auch ein solcher Modus als ein kontinuierlicher Modus angesehen, bei welchem eine Pumpe, die zum Zuführen des Brühwassers dient, in einem gedrosselten Modus angesteuert wird, bei welchem vergleichsweise schnelle elektrische Impulse im Rahmen einer Pulsweitenmodulations- Pumpenansteuerung zum Einsatz kommen. Bei solchen schnellen elektrischen Impulsen liegt die Frequenz typischerweise bei 50 Hz oder höher. Durch die Trägheit der Pumpe wird bei derartigen schnellen Impulsen deren Betrieb nicht unterbrochen. Vielmehr wird der geförderte Volumenstrom bei weitgehend durchgehender Förderung gedrosselt, ohne dass nennenswerte Stösse auf das Mahlgut ausgeübt werden.

Es hat sich überraschend gezeigt, dass durch eine zumindest zeitweise impulsweise Zufuhr des Brühwassers in dem zweiten Brühwasser-Zuführungsmodus auch dann ein qualitativ hochwertiges Kaffeegetränk erhalten werden kann, wenn das Mahlgut einen feinen Mahlgrad aufweist. Insbesondere kann durch das zumindest zeitweise impulsweise Zuführen ein ausreichend geringer Druck am Brühwassereinlass und/oder ein ausreichend grosser Volumenstrom durch die Brühkammer selbst bei einem sehr feinen Mahlgrad erreicht werden. Dies kann sogar dann gelten, wenn der Mahlgrad des Mahlgutes derart fein ist, dass bei einem kontinuierlichen Betrieb (Dauerstrich-Betrieb) einer Brühwasserpumpe, die für die Brühwasser-Zufuhr verwendet wird, die Leistung der Brühwasserpumpe zum Aufbauen eines zum Durchtritt des Brühwassers durch die Brühkammer erforderlichen Druckes nicht ausreichen würde.

Gemäss einem weiteren Aspekt der Erfindung ist es vorgesehen, dass die Verfahrensschritte wiederholt durchgeführt werden, die während des zweiten Zuführungszeitraums ausgeführt werden. Es wird gemäss diesem Aspekt also Folgendes in einer Schleife wiederholt durchgeführt:
- Ermitteln einer Brühwasser-Kenngrösse, die mit dem Volumenstrom und/oder mit dem Druck des geförderten Brühwassers zusammenhängt, und Einstellen, unter Verwendung der Brühwasser-Kenngrösse, einer Modus-Einstellgrösse für einen zweiten Brühwasser-Zuführungsmodus; und
- Zuführen von Brühwasser an den Brühwassereinlass (35) gemäss dem zweiten Brühwasser-Zuführungsmodus.
Das Ermitteln der Brühwasser-Kenngrösse erfolgt bei einem wiederholten Durchführen der Verfahrensschritte beispielsweise kontinuierlich oder in vorab festgelegten oder festlegbaren Intervallen. Das Einstellen der Modus-Einstellgrösse für den zweiten Brühwasser-Zuführungsmodus ist dann ein Verändern dieser Modus-Einstellgrösse unter Verwendung der Brühwasser-Kenngrösse bzw. in Abhängigkeit von der Brühwasser-Kenngrösse. Auch dieses Verändern der Modus-Einstellgrösse erfolgt z. B. kontinuierlich oder in vorab festgelegten oder festlegbaren Intervallen. Zwischen dem Einstellen der Modus-Kenngrösse und einem erneuten Ermitteln der Brühwasser-Kenngrösse, also vor einem erneuten Schleifendurchlauf, kann eine geeignete Verzögerung vorgesehen werden.

Das Zuführen von Brühwasser im zweiten Brühwasser-Zuführungsmodus erfolgt jedoch auch bei einem wiederholten Durchführen der genannten Verfahrensschritte bevorzugt durchgehend, also ohne Unterbrechung des Brühvorganges. Wenn die Modus-Einstellgrösse für den zweiten Brühwasser-Zuführungsmodus zu einem bestimmten Zeitpunkt verändert wird, wird entsprechend auch der zweite Brühwasser-Zuführungsmodus gemäss der veränderten Modus-Einstellgrösse fortgeführt.

Es kann ausserdem ein geeignetes Kriterium vorgesehen sein, bei dessen Vorliegen das wiederholte Durchführen der genannten Verfahrensschritte beendet wird, z. B. ein Abbruchkriterium für den Kaffeebezug.

Gemäss einem weiteren Aspekt der Erfindung ist vorgesehen, dass das Einstellen der Modus-Einstellgrösse für den zweiten Brühwasser-Zuführungsmodus ein Umschalten zwischen dem kontinuierlichen Modus für den zweiten Brühwasser-Zuführungsmodus und dem Impulsmodus für den zweiten Brühwasser-Zuführungsmodus in Abhängigkeit von der Brühwasser-Kenngrösse umfasst, d.h. das Umschalten zwischen dem kontinuierlichen Modus für den zweiten Brühwasser-Zuführungsmodus und dem Impulsmodus für den zweiten Brühwasser-Zuführungsmodus erfolgt insbesondere in Abhängigkeit von dem gemessenen Druck des an den Brühwassereinlass zugeführten Brühwassers und/oder dem gemessenen Volumenstrom des an den Brühkammer-Einlass zugeführten Brühwassers und/oder dem gemessenen Volumenstrom der aus dem Kammerauslass austretenden Flüssigkeit umfasst. Ein solches Umschalten kommt insbesondere dann in Betracht, wenn die oben genannten Verfahrensschritte wiederholt durchgeführt werden, wenn also die Brühwasser-Kenngrösse während eines Brühvorganges wiederholt ermittelt wird. Es ist gemäss diesem Aspekt also vorgesehen, dass selektiv zwischen dem Impulsmodus und dem kontinuierlichen Modus umgeschaltet wird, je nachdem, welche aktuellen Eigenschaften der Brühwasser-Kenngrösse ermittelt wurden.

Gemäss einem Aspekt der Erfindung kann vorgesehen sein, dass in die Brühwasser-Kenngrösse ein gemessener Volumenstrom des an den Brühkammer-Einlass zugeführten Brühwassers eingeht. Im einfachsten Fall ist die Brühwasser-Kenngrösse selbst der gemessene Volumenstrom des zugeführten Brühwassers an den Brühkammer-Einlass. Die Modus-Einstellgrösse für den zweiten Brühwasser-Zuführungsmodus erfolgt dann unter Verwendung des gemessenen Volumenstroms bzw. in Abhängigkeit von dem gemessenen Volumenstrom des an den Brühkammer-Einlass zugeführten Brühwassers. Ein niedriger gemessener Volumenstrom des an den Brühkammer-Einlass zugeführten Brühwassers kann auf einen schwierigen Durchtritt des Brühwassers durch das Mahlgut innerhalb der Brühkammer hindeuten, der beispielsweise durch einen feinen Mahlgrad hervorgerufen wird.

Gemäss einem Aspekt der Erfindung kann vorgesehen sein, dass in die Brühwasser-Kenngrösse ein gemessener Volumenstrom des aus dem Kammerauslass austretenden Brühwassers eingeht. Wiederum ist im einfachsten Fall die Brühwasser-Kenngrösse selbst der gemessene Volumenstrom des aus dem Kammerauslass austretenden Brühwassers. Die Modus-Einstellgrösse für den zweiten Brühwasser-Zuführungsmodus erfolgt dann unter Verwendung des gemessenen Volumenstroms des aus dem Kammerauslass austretenden Brühwassers bzw. in Abhängigkeit von dem gemessenen Volumenstrom des aus dem Kammerauslass austretenden Brühwassers. Auch hier gilt, dass ein niedriger gemessener Volumenstrom des aus dem Kammerauslass austretenden Brühwassers auf einen schwierigen Durchtritt des Brühwassers durch das Mahlgut innerhalb der Brühkammer hindeuten, der beispielsweise durch einen feinen Mahlgrad hervorgerufen wird.

Gemäss einem Aspekt der Erfindung kann vorgesehen sein, dass in die Brühwasser-Kenngrösse ein gemessener Druck am Brühwasser-Einlass eingeht. Wiederum ist im einfachsten Fall die Brühwasser-Kenngrösse selbst der gemessene Druck am Brühwasser-Einlass. Die Modus-Einstellgrösse für den zweiten Brühwasser-Zuführungsmodus erfolgt dann unter Verwendung des gemessenen Drucks am Brühwasser-Einlass bzw. in Abhängigkeit von dem gemessenen Druck am Brühwasser-Einlass. In Bezug auf den gemessenen Druck gilt, dass ein hoher Druck auf einen schwierigen Durchtritt des Brühwassers durch das Mahlgut innerhalb der Brühkammer hindeuten kann, der wiederum beispielsweise durch einen feinen Mahlgrad hervorgerufen wird.

Mit den genannten Parametern, die einzeln oder auch in Kombination in die Brühwasser-Kenngrösse eingehen können, kann also das Vorliegen eines feinen Mahlgrades detektiert werden. Durch ein geeignetes Einstellen der Modus-Einstellgrösse kann dies dann zumindest teilweise kompensiert werden.

Das erfindungsgemässe Verfahren kann bei einem Kaffee-Vollautomaten zum Einsatz kommen, wie weiter unten noch beschrieben wird. Ein solcher Kaffee-Vollautomat ist mit einem Mahlwerk ausgestattet, welches geröstete Kaffeebohnen zu einem gebrauchsfertigen Mahlgut aus Kaffeemehl verarbeitet. Hierbei ist es denkbar, dass das Mahlwerk in seinem Mahlgrad manuell verstellbar oder automatisch verstellbar ausgebildet ist.

Eine automatische Mahlgradverstellung kann insbesondere dann vorteilhaft sein, wenn der Kaffee-Vollautomat eine Auswahl für das zuzubereitende Kaffeegetränk zulässt. Beispiele für auswählbare Kaffeegetränke sind Kaffee, Espresso, Ristretto, Cappuccino, Latte Macchiato. Die Auswahl ist jedoch nicht auf die genannten Beispiele beschränkt. Für die Zubereitung eines amerikanischen Kaffees kann die Maschine das automatisch verstellbare Mahlwerk z. B. auf eine gröbere Mahlung umstellen, während z. B. bei der Auswahl eines Espressos eine feinere Mahlung eingestellt wird.

Der Mahlgrad des Mahlgutes kann z. B. aus der Mahlgradeinstellung des automatisch oder manuell verstellbaren Mahlwerks abgeleitet sein. Gemäss einem weiteren Aspekt der Erfindung ist nun vorgesehen, dass der eingestellte Mahlgrad des Mahlgutes in die Brühwasser-Kenngrösse eingeht. Alternativ oder zusätzlich kann es auch vorgesehen sein, dass in die Brühwasser-Kenngrösse die eingestellte Kaffeegetränkeart eingeht, also die ausgewählte Einstellung für das zuzubereitende Kaffeegetränk.

Diese Zusatzinformationen zu dem gemessenen Volumenstrom und/oder zu dem gemessenen Volumen, also der Mahlgrad bzw. die eingestellte Kaffeegetränkeart, können dazu beitragen, die Modus-Einstellgrösse vorteilhafter einzustellen.

So kann z. B. bei einem bestimmten eingestellten Mahlgrad (z. B. bei einem fein eingestellten Mahlgrad) von Beginn des zweiten Zuführungszeitraums an gleich ein Impulsmodus eingestellt werden, der sich gut für einen solchen Mahlgrad eignet. Unter Einbeziehung der gemessenen Werte (Volumenstrom und/oder Druck) kann das Einstellen insbesondere bei einem wiederholten Durchführen der entsprechenden Verfahrensschritte an die tatsächlichen in der Brühkammer vorliegenden Verhältnisse angepasst werden.

Auf ähnliche Weise kann z. B. bei einer bestimmten eingestellten Kaffeegetränkeart ein höherer Druck und/oder ein geringerer Volumenstrom zugelassen werden als bei einer anderen, bevor der Impulsmodus eingestellt wird.

In einer vorteilhaften Weiterbildung definiert bei dem erfindungsgemässen Verfahren die Modus-Einstellgrösse zusätzlich Impulseigenschaften für den zweiten Brühwasser-Zuführungsmodus, die ein Impuls-Tastverhältnis oder einen Zeitverlauf des Impuls-Tastverhältnisses enthalten. Gemäss diesem Aspekt weist das Einstellen der Modus-Einstellgrösse ein Einstellen der Impulseigenschaften für den Impulsmodus auf.

Unter dem Impuls-Tastverhältnis wird das zeitliche Verhältnis von der Einschaltdauer zu der Ausschaltdauer der Brühwasser-Zufuhr während der Periodendauer verstanden, beispielsweise also das zeitliche Verhältnis von der Einschaltdauer zu der Ausschaltdauer einer Pumpe zur Brühwasser-Zufuhr. Es wird gemäss diesem Aspekt also das Impuls-Tastverhältnis in Abhängigkeit von der Brühwasser-Kenngrösse eingestellt. Beispielsweise kann es vorgesehen sein, dass dann, wenn die Brühwasser-Kenngrösse auf einen feinen Mahlgrad hindeutet, ein Impuls-Tastverhältnis eingestellt wird, bei welchem die Einschaltdauer und die Ausschaltdauer während der Periodendauer annähernd gleich gross sind. Ähnlich kann dann, wenn die Brühwasser-Kenngrösse auf einen gröberen Mahlgrad hindeutet, ein Impuls-Tastverhältnis eingestellt werden, bei welchem die Einschaltdauer länger ist als die Ausschaltdauer. Es ist jedoch auch möglich, bei gleichbleibender Periodendauer einen progressiven oder einen degressiven Zeitverlauf des Impuls-Tastverhältnisses vorzugeben.

Eine typische Periodendauer liegt im Bereich zwischen ca. 0,1 s und ca. 4 s. Diese Werte sind jedoch beispielhaft und nicht einschränkend zu verstehen.

Der Zeitverlauf des Impuls-Tastverhältnisses beinhaltet zusätzlich zu einer Variation des Impuls-Tastverhältnisses selbst auch eine Variation der Periodendauer über den Zeitverlauf. Hierdurch kann eine Veränderbarkeit nicht nur des Impuls-Tastverhältnisses an sich, sondern auch der Einschaltdauer während der Impulse und/oder der Pausendauer zwischen den einzelnen Impulsen erzielt werden.

So kann es vorgesehen sein, dass die Periodendauer derart verändert wird, dass sich ein progressiver oder ein degressiver Zeitverlauf der Einschaltzeiten der Impulse ergibt. Es ist auch möglich, zunächst einen progressiven Verlauf der Einschaltzeiten der Impulse vorzusehen, an welchen sich dann ein degressiver Verlauf der Einschaltzeiten der Impulse anschliesst. Ebenso ist es auch möglich, zunächst einen degressiven Verlauf der Einschaltzeiten der Impulse vorzusehen, an welchen sich dann ein progressiver Verlauf der Einschaltzeiten der Impulse anschliesst.

Auf analoge Weise ist es möglich, dass die Periodendauer derart verändert wird, dass sich ein progressiver oder ein degressiver Zeitverlauf der Pausendauern der Impulse ergibt. Es ist auch möglich, zunächst einen progressiven Verlauf der Pausendauern der Impulse vorzusehen, an welchen sich dann ein degressiver Verlauf der Pausendauern der Impulse anschliesst. Ebenso ist es auch möglich, zunächst einen degressiven Verlauf der Pausendauern vorzusehen, an welchen sich dann ein progressiver Verlauf der Pausendauern anschliesst.

Gemäss einer vorteilhaften Weiterbildung der Erfindung ist es vorgesehen, dass in Abhängigkeit von der Brühwasser-Kenngrösse einmal oder mehrere Male zwischen dem kontinuierlichen Modus und dem Impulsmodus umgeschaltet wird. Wiederum können durch die Modus-Einstellgrösse zusätzliche Impulseigenschaften für den Impulsmodus definiert werden, wie oben beschrieben. Es ist wiederum denkbar, dass die zusätzlichen Impulseigenschaften vor dem Umschalten in den Impulsmodus verändert werden, z. B. wenn während eines Brühvorganges bereits der Impulsmodus ausgewählt war, anschliessend in den kontinuierlichen Modus umgeschaltet wurde, und dann in den Impulsmodus mit veränderten Impulseigenschaften zurückgeschaltet wird. Es ist alternativ oder zusätzlich möglich, dass die zusätzlichen Impulseigenschaften verändert werden, während der zweite Brühwasser-Zuführungsmodus im Impulsmodus durchgeführt wird, wie oben bereits beschrieben. Ein Verändern der zusätzlichen Impulseigenschaften kann wiederum progressive und/oder degressive Zeitverläufe des Impuls-Tastverhältnisses, der Impuls-Pausendauer und/oder der Impuls-Einschaltzeit umfassen.

Gemäss einem Aspekt der Erfindung kann vorgesehen sein, dass das Einstellen der Modus-Einstellgrösse Folgendes aufweist:
- Auswählen des Impulsmodus für den zweiten Brühwasser-Zuführungsmodus, wenn der Druck am Brühwasser-Einlass einen vorab festgelegten oder festlegbaren Druck-Schwellenwert überschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumenstrom-Schwellenwert unterschreitet bzw. unterschreiten.
Der Impulsmodus für den zweiten Brühwasser-Zuführungsmodus wird gemäss diesem Aspekt der Erfindung also ausgewählt, wenn das Ermitteln der Brühwasser-Kenngrösse ergibt, dass der Druck am Brühwasser-Einlass einen Schwellenwert für den Druck überschreitet; alternativ oder zusätzlich wird der Impulsmodus für den zweiten Brühwasser-Zuführungsmodus gemäss diesem Aspekt der Erfindung ausgewählt, wenn das Ermitteln der Brühwasser-Kenngrösse ergibt, dass der Volumenstrom des zugeführten Brühwassers an den Brühkammer-Einlass und/oder der Volumenstrom der aus dem Kammerauslass austretenden Flüssigkeit einen Schwellenwert für den Volumenstrom unterschreitet. Sowohl ein über einem Schwellenwert liegender Druck, als auch unter einem Schwellenwert liegende Volumenströme können darauf hindeuten, dass der Brühvorgang besser durchgeführt werden kann, wenn für den zweiten Brühwasser-Zuführungsmodus der Impulsmodus gewählt wird. Die genannten Grössen, die den jeweiligen Schwellenwert über- bzw. unterschreiten, können sich z. B. durch einen sehr feinen Mahlgrad des Mahlgutes ergeben. Durch Wählen des Impulsmodus können damit verbundene Nachteile während der Brühwasser-Zufuhr verringert oder vermieden werden.

In diesem Zusammenhang ist darauf hinzuweisen, dass der erste Brühwasser-Zuführungsmodus, mit welchem initial dem Brühwassereinlass der Brühkammer eine gewisse Brühwassermenge zugeführt wird, ein ungepulster Modus ist, in welchem ein Zuführen des Brühwassers kontinuierlich (also ungepulst) erfolgt. Der erste Brühwasser-Zuführungsmodus ist typischerweise zeitlich begrenzt, um ein Ermitteln der Brühwasser-Kenngrösse vorzubereiten. Beispielsweise dient der erste Brühwasser-Zuführungsmodus zum ersten Druckaufbau des Brühwassers und/oder zum Herstellen eines ersten Volumenstroms von Brühwasser durch die Brühkammer. Beispielsweise ist der erste Brühwasser-Zuführungsmodus weniger als drei Sekunden lang oder weniger als fünf Sekunden lang.

Wenn - wie normalerweise üblich - eine Brühwasserpumpe zum Zuführen des Brühwassers zum Einsatz kommt, ist der ungepulste Modus z. B. ein Dauerstrichmodus der Brühwasserpumpe auf ihrer Nennleistung oder ein durchgehender Modus der Brühwasserpumpe auf einer gedrosselten Leistung.

Beim kontinuierlichen Zuführen des Brühwassers im ersten Brühwasser-Zuführungsmodus ist es denkbar, aber nicht notwendig, dass das Brühwasser mit den gleichen Parametern zugeführt wird wie bei einer kontinuierlichen Zufuhr während des zweiten Brühwasser-Zuführungsmodus. Solche Parameter umfassen beispielsweise die Pumpleistung (also den geförderten Volumenstrom) .

Gemäss einem Aspekt der Erfindung kann das Einstellen der Modus-Einstellgrösse Folgendes aufweisen:
- Auswählen des kontinuierlichen Modus für den zweiten Brühwasser-Zuführungsmodus, wenn der Druck am Brühwasser-Einlass einen vorab festgelegten oder festlegbaren Druck-Schwellenwert unterschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumenstrom-Schwellenwert überschreitet bzw. überschreiten.

Der kontinuierliche Modus für den zweiten Brühwasser-Zuführungsmodus wird gemäss diesem Aspekt der Erfindung also ausgewählt, wenn das Ermitteln der Brühwasser-Kenngrösse ergibt, dass der Druck am Brühwasser-Einlass ausreichend niedrig liegt, also einen Schwellenwert für den Druck nicht überschreitet; alternativ oder zusätzlich wird der kontinuierliche Modus für den zweiten Brühwasser-Zuführungsmodus gemäss diesem Aspekt der Erfindung ausgewählt, wenn das Ermitteln der Brühwasser-Kenngrösse ergibt, dass der Volumenstrom des zugeführten Brühwassers an den Brühkammer-Einlass und/oder der Volumenstrom der aus dem Kammerauslass austretenden Flüssigkeit ausreichend gross ist, also einen Schwellenwert für den Volumenstrom unterschreitet.

Sowohl ein unter einem Schwellenwert liegender Druck, als auch über einem Schwellenwert liegende Volumenströme können darauf hindeuten, dass der Brühvorgang besser durchgeführt werden kann, wenn für den zweiten Brühwasser-Zuführungsmodus der kontinuierliche Modus gewählt wird.

Vorteilhafterweise werden gemäss einem Aspekt der Erfindung die Möglichkeiten zum Einstellen der Modus-Einstellgrösse kombiniert; mit anderen Worten: Gemäss diesem Aspekt der Erfindung weist das Einstellen der Modus-Einstellgrösse Folgendes auf:
- Auswählen des Impulsmodus für den zweiten Brühwasser-Zuführungsmodus, wenn der Druck am Brühwasser-Einlass einen vorab festgelegten oder festlegbaren Druck-Schwellenwert überschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumen-Schwellenwert unterschreitet bzw. unterschreiten; und
- Auswählen des kontinuierlichen Modus für den zweiten Brühwasser-Zuführungsmodus, wenn der Druck am Brühwasser-Einlass den vorab festgelegten oder festlegbaren Druck-Schwellenwert unterschreitet und/oder wenn der Volumenstrom des zugeführten Brühwassers an den Brühkammer-Einlass und/oder der Volumenstrom der aus dem Kammerauslass austretenden Flüssigkeit den vorab festgelegten oder festlegbaren Volumen-Schwellenwert überschreitet bzw. überschreiten.

Es ist gemäss diesem Aspekt vorgesehen, dass während des zweiten Brühwasser-Zuführungsmodus zwischen dem Impulsmodus und dem kontinuierlichen Modus (dem ungepulsten Modus) umgeschaltet werden kann, und zwar in Abhängigkeit von der ermittelten momentanen Eigenschaft der Brühwasser-Kenngrösse, also in Abhängigkeit von dem Druck, der in die Brühwasser-Kenngrösse eingeht und/oder des Volumenstroms, der in die Brühwasser-Kenngrösse eingeht.

Beispielsweise kann es in diesem Zusammenhang vorgesehen sein, dass nach dem Übergang von dem ersten Zuführungszeitraum zum zweiten Zuführungszeitraum zunächst beim Ermitteln der Brühwasser-Kenngrösse festgestellt wird, dass der Druck-Schwellenwert überschritten wird und/oder dass der Volumenstrom-Schwellenwert unterschritten wird. Die Brühwasser-Zufuhr während des zweiten Zuführungszeitraums erfolgt dann zunächst im Impulsmodus, beispielsweise im Impulsmodus bei unveränderten zusätzlichen Impulsparametern oder im Impulsmodus bei zeitlich veränderlichen zusätzlichen Impulsparametern.

Anschliessend werden während des zweiten Zuführungszeitraums die Verfahrensschritte wiederholt ausgeführt, wonach die Brühwasser-Kenngrösse ermittelt wird und unter Verwendung in Abhängigkeit von der Brühwasser-Kenngrösse die Modus-Einstellgrösse für den zweiten Brühwasser-Zuführungsmodus eingestellt wird.

Wird nun während des zweiten Zuführungszeitraums beim Ermitteln der Brühwasser-Kenngrösse festgestellt, dass der Druck-Schwellenwert unterschritten wird und/oder dass der Volumenstrom-Schwellenwert überschritten wird, dann wird gemäss dem beschriebenen Aspekt der Erfindung durch entsprechendes Einstellen der Modus-Einstellgrösse in den kontinuierlichen Modus umgeschaltet. Dies kann dazu beitragen, die für die Kaffeezubereitung benötigte Zeit zu verkürzen.

Es ist auch ein bedarfsweises Wechseln zwischen dem kontinuierlichen Modus und dem Impulsmodus denkbar. Insbesondere ist es möglich, dass dann, wenn während des zweiten Zuführungszeitraums der kontinuierliche Zuführungsmodus durchgeführt wird und beim Ermitteln der Brühwasser-Kenngrösse festgestellt wird, dass der Druck-Schwellenwert (erneut) überschritten wird und/oder dass der Volumenstrom-Schwellenwert (erneut) unterschritten wird, (wieder) in den Impulsmodus zurückgeschaltet wird.

Ein Kaffeeautomat zum Durchführen des erfindungsgemässen Verfahrens weist u.a. auf: eine Brühkammer zum Aufnehmen von Mahlgut, insbesondere von gemahlenem Kaffee, wobei die Brühkammer einen Brühwassereinlass und einen Kammerauslass aufweist; eine Pumpe, vorzugsweise eine Schwingkolbenpumpe, zum Zuführen von Brühwasser zum Brühwassereinlass der Brühkammer unter einem Druck; eine Pumpensteuereinrichtung zum Ansteuern der Pumpe; und mindestens eine Messeinrichtung, die dazu ausgelegt ist, Messwerte für einen Druck des an den Brühwassereinlass zugeführten Brühwassers am Brühwassereinlass und/oder Messwerte für einen Volumenstrom des an den Brühkammer-Einlass zugeführten Brühwassers und/oder Messwerte für einen Volumenstrom der aus dem Kammerauslass austretenden Flüssigkeit zu erfassen und erfasste Messwerte der Pumpensteuereinrichtung zuzuführen.

Die Pumpensteuereinrichtung ist weiterhin dazu ausgebildet, die Pumpe während eines ersten Zuführungszeitraums und eines auf den ersten Zuführungszeitraum folgenden zweiten Zuführungszeitraums derart anzusteuern, dass Brühwasser mittels der Pumpe während des ersten Zuführungszeitraums gemäss einem ersten Brühwasser-Zuführungsmodus und während des zweiten Zuführungszeitraums gemäss einem zweiten Brühwasser-Zuführungsmodus zum Brühwassereinlass zuführbar ist.

Die Pumpe ist dabei von der Pumpensteuereinrichtung derart ansteuerbar, dass die Pumpe im ersten Brühwasser-Zuführungsmodus das Brühwasser während des ersten Zuführungszeitraums kontinuierlich zum Brühwassereinlass zuführt und im zweiten Brühwasser-Zuführungsmodus das Brühwasser während des zweiten Zuführungszeitraums wahlweise in einem kontinuierlichen Modus, in welchem das Brühwasser kontinuierlich an den Brühwassereinlass zugeführt wird, oder in einem Impulsmodus, in welchem das Brühwasser impulsweise an den Brühwassereinlass zugeführt wird, zuführt.

Die Pumpensteuereinrichtung ist dazu ausgebildet, die Pumpe während des zweiten Zuführungszeitraums in Abhängigkeit von mindestens einem erfassten Messwert der Messeinrichtung derart anzusteuern, dass ein Zuführen des Brühwassers in Abhängigkeit von dem mindestens einen erfassten Messwert wahlweise im kontinuierlichen Modus oder im Impulsmodus gemäss einem der folgenden Fälle erfolgt:
- falls der mindestens eine erfasste Messwert ein Messwert für den Druck des an den Brühwassereinlass zugeführten Brühwassers am Brühwassereinlass ist, erfolgt das Zuführen des Brühwassers im Impulsmodus, wenn der Messwert für den Druck grösser als ein vorab festgelegter oder festlegbarer Druck-Schwellenwert ist, und im kontinuierlichen Modus, wenn der Messwert für den Druck kleiner als ein vorab festgelegter oder festlegbarer Druck-Schwellenwert ist;
- falls der mindestens eine erfasste Messwert ein Messwert für einen Volumenstrom des an den Brühkammer-Einlass zugeführten Brühwassers oder ein Messwert für einen Volumenstrom der aus dem Kammerauslass austretenden Flüssigkeit ist, erfolgt das Zuführen des Brühwassers im Impulsmodus, wenn der Messwert für den Volumenstrom kleiner als ein vorab festgelegter oder festlegbarer Volumenstrom-Schwellenwert ist, und im kontinuierlichen Modus, wenn der der Messwert für den Volumenstrom grösser als ein vorab festgelegter oder festlegbarer Volumenstrom-Schwellenwert ist.

Die Pumpensteuereinrichtung ist dazu ausgebildet, den ersten Brühwasser-Zuführungsmodus und den zweiten Brühwasser-Zuführungsmodus gemäss dem erfindungsgemässen Verfahren durchzuführen. Die Pumpensteuereinrichtung ist ausserdem dazu ausgebildet, die Brühwasser-Kenngrösse zum Einstellen der Modus-Einstellgrösse für den zweiten Brühwasser-Zuführungsmodus aus den erfassten Messwerten von der mindestens einen Messeinrichtung abzuleiten.

Die Pumpensteuereinrichtung ist dazu ausgebildet, bei Durchführen des ersten und/oder zweiten Brühwasser-Zuführungsmodus eine entsprechende Ansteuerung der Pumpe vorzunehmen, also durch die Ansteuerung zu bewirken, dass die Pumpe im kontinuierlichen Betrieb (für eine Brühwasser-Zufuhr im kontinuierlichen Modus) oder im Impulsbetrieb (für eine Brühwasser-Zufuhr im Impulsmodus) arbeitet und/oder zwischen den genannten Betriebsarten verfahrensgemäss umschaltet.

Bevorzugt ist es vorgesehen, dass der Kaffeeautomat ein in Bezug auf den Mahlgrad manuell oder automatisch verstellbares Mahlwerk aufweist, wobei eine Mahlgrad-Gebereinrichtung vorgesehen ist, welche dazu ausgebildet ist, den eingestellten Mahlgrad der Pumpensteuereinrichtung zuzuführen.

Weitere Einzelheiten der Erfindung und insbesondere eine Ausführungsvariante des erfindungsgemässen Verfahrens werden im Folgenden anhand der beigefügten Zeichnungen näher erläutert. In den Zeichnungen zeigen:
- Fig. 1: eine schematische Darstellung eines Kaffeeautomaten zum Durchführen des hierin beschriebenen erfindungsgemässen Verfahrens, mit einer Brühwasserpumpe, einer eine Brühkammer umfassenden Brühvorrichtung und einer Kaffee-Ausgabeeinrichtung;
- Fig. 2: ein Impulssignal zum Ansteuern der Brühwasserpumpe mit einem Impulssignal gemäss einer Ausführungsform des Verfahrens;
- Fig. 3: ein Impulssignal zum Ansteuern der Brühwasserpumpe mit einem Impulssignal und einem sich anschliessenden kontinuierlichen Signal gemäss einer weiteren Ausführungsform des Verfahrens;
- Fig. 4: ein Impulssignal zum Ansteuern der Brühwasserpumpe mit einem Impulssignal mit progressivem Verlauf der Impuls-Pausendauer gemäss einer weiteren Ausführungsform des Verfahrens;
- Fig. 5: ein Impulssignal zum Ansteuern der Brühwasserpumpe mit einem Impulssignal mit degressivem Verlauf der Impuls-Pausendauer gemäss einer weiteren Ausführungsform des Verfahrens;
- Fig. 6: ein Impulssignal zum Ansteuern der Brühwasserpumpe mit einem Impulssignal mit progressiv-degressivem Verlauf der Impuls-Pausendauer gemäss einer weiteren Ausführungsform des Verfahrens;
- Fig. 7: ein Impulssignal zum Ansteuern der Brühwasserpumpe mit einem Impulssignal mit degressivem Verlauf der Impuls-Einschaltzeit gemäss einer weiteren Ausführungsform des Verfahrens;
- Fig. 8: ein Impulssignal zum Ansteuern der Brühwasserpumpe mit einem Impulssignal mit progressivem Verlauf der Impuls-Einschaltzeit gemäss einer weiteren Ausführungsform des Verfahrens;
- Fig. 9: ein Impulssignal zum Ansteuern der Brühwasserpumpe mit einem Impulssignal mit variablem Verlauf der Impuls-Einschaltzeit und der Impuls-Pausendauer sowie mit einem sich anschliessenden kontinuierlichen Signal gemäss einer weiteren Ausführungsform des Verfahrens;
- Fig. 10: eine schematische Darstellung von Druck und Durchfluss in Abhängigkeit von dem Mahlgrad, bei einem Kaffeeautomaten zum Durchführen des Verfahrens;
- Fig. 11: eine schematische Darstellung von Druck und Durchfluss im Zeitverlauf bei grobem Mahlgrad und konstanter Pumpenleistung;
- Fig. 12: eine schematische Darstellung von Druck und Durchfluss im Zeitverlauf bei feinem Mahlgrad und konstanter Pumpenleistung;
- Fig. 13: eine schematische Darstellung von Druck und Durchfluss im Zeitverlauf bei sehr feinem Mahlgrad und einem zeitweiligen Betrieb der Pumpe im Impulsmodus;
- Fig. 14: eine schematische Darstellung von Druck und Durchfluss im Zeitverlauf bei grobem Mahlgrad und Betrieb der Pumpe im Impulsmodus mit kurzer Impulsdauer;
- Fig. 15: eine schematische Darstellung von Druck und Durchfluss im Zeitverlauf bei feinem Mahlgrad und Betrieb der Pumpe im Impulsmodus mit kurzer Impulsdauer;
- Fig. 16: eine schematische Darstellung von Druck und Durchfluss im Zeitverlauf bei grobem Mahlgrad und Betrieb der Pumpe im Impulsmodus mit langer Impulsdauer;
- Fig. 17: eine schematische Darstellung von Druck und Durchfluss im Zeitverlauf bei feinem Mahlgrad und Betrieb der Pumpe im Impulsmodus mit langer Impulsdauer;
- Fig. 18: eine perspektivische schematische Ansicht eines automatisch verstellbaren Mahlwerks, zum Einsatz bei einem Kaffeeautomaten in Verbindung mit der vorliegenden Erfindung; und
- Fig. 19: eine perspektivische schematische Ansicht eines Ausschnitt eines manuell verstellbaren Mahlwerks, zum Einsatz bei einem Kaffeeautomaten in Verbindung mit der vorliegenden Erfindung.

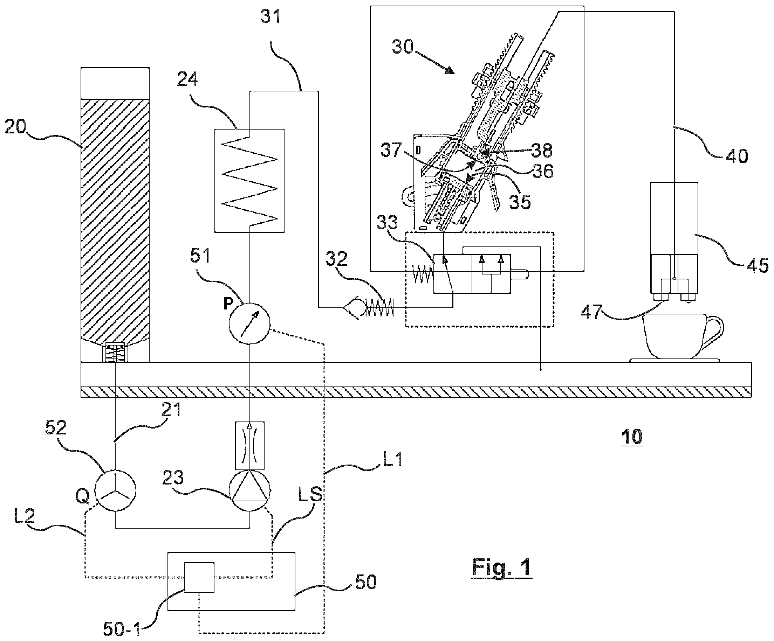

Fig. 1 zeigt eine schematische Darstellung eines Kaffeeautomaten 10 zum Durchführen des hierin beschriebenen erfindungsgemässen Verfahrens. Der Kaffeeautomat 10 weist einen Wassertank 20 auf, dessen Auslass mit einer Frischwasserleitung 21 verbunden ist, welche in den Einlass einer Brühwasserpumpe 23 mündet. Die Brühwasserpumpe 23 ist dazu ausgebildet, über eine weitere Leitung das von ihr geförderte Wasser aus dem Wassertank 20 zunächst einem Brühwassererhitzer 24 zuzuführen, welcher das Wasser auf eine gewünschte Brühtemperatur erhitzt. Die Brühtemperatur wird geeignet gewählt und kann automatisch geregelt werden. Der Auslass des Brühwassererhitzers 24 ist über eine Brühwasser-Zufuhrleitung 31, ein sich anschliessendes Rückschlagventil 32 und ein Wegeventil 33 mit dem Brühwasser-Einlass 35 einer Brühkammer 36 verbunden. Die Brühkammer 36 ist Bestandteil einer Brühvorrichtung 30 zum Bereiten eines Kaffeegetränks und während eines Brühvorganges mit Mahlgut (Kaffeemehl) gefüllt.

Über den Brühwasser-Einlass 35 in die Brühkammer 36 geführtes Brühwasser muss das Mahlgut durchdringen, bevor es aus einem Kammerauslass 37 der Brühkammer 36 austritt. Dabei reichert es sich in gewünschter Weise mit Kaffeearomen an und wird über eine Kaffee-Ausgabeleitung 40 einer Kaffee-Ausgabeeinrichtung 45 zugeführt, aus deren Kaffee-Ausgangsöffnung 47 letztendlich das Kaffeegetränk ausgegeben wird.

Zur Durchführung des erfindungsgemässen Verfahrens ist eine Steuereinheit 50 vorgesehen, welche eine Pumpen-Steuereinrichtung 50-1 aufweist. Die Pumpen-Steuereinrichtung 50-1 ist über eine Steuersignalverbindung LS mit der Brühwasserpumpe 23 verbunden, und die Pumpen-Steuereinrichtung 50-1 kann die Brühwasserpumpe 23 über die Steuersignalverbindung LS ansteuern. Das Ansteuern umfasst zur Durchführung des erfindungsgemässen Verfahrens zumindest ein Betreiben im Impulsmodus, d. h. ein Ein- und Ausschalten der Brühwasserpumpe 23 in zeitlichen Abständen.

Es ist eine Druckmesseinrichtung 51 vorgesehen, welche kontinuierlich den Wasserdruck P erfasst, welcher im Leitungssystem der Brühwasser-Zufuhrleitung 31 und damit am Brühwasser-Einlass 35 der Brühkammer 36 anliegt. Sie übermittelt diesen Messwert über eine erste Messwertverbindung L1 kontinuierlich an die Pumpen-Steuereinrichtung 50-1. Es sei angemerkt, dass das Erfassen des Druckes P und/oder das Übermitteln des Messwerts auch zeitdiskret in geeigneten Messintervallen erfolgen kann.

Bei der dargestellten Variante ist zwischen dem Wassertank 20 und der Brühwasserpumpe 23 ausserdem eine Durchflussmesseinrichtung 52 vorgesehen, welche die Durchflussmenge (den Volumenstrom) Q des durchtretenden Brühwassers kontinuierlich erfasst und diesen Messwert über eine zweite Messwertverbindung L2 kontinuierlich an die Pumpen-Steuereinrichtung 50-1 übermittelt. Es sei angemerkt, dass das Erfassen der Durchflussmenge Q und/oder das Übermitteln des Messwerts auch zeitdiskret in geeigneten Messintervallen erfolgen kann.

Bei anderen Varianten kann auch bloss eine der genannten Messeinrichtungen 51, 52 vorgesehen sein. Bei weiteren Varianten kann es vorgesehen sein, dass die Durchflussmesseinrichtung 52 an einer anderen Stelle vorgesehen ist, beispielsweise am Kammerauslass 37 der Brühkammer bzw. im Auslasszweig des zu erzeugenden Kaffeegetränks.

Die Brühvorrichtung 30 ist im vorliegenden Beispiel eingerichtet, Mahlgut in der Brühkammer 36 mit unter Druck stehendem Brühwasser zu brühen, um beispielsweise das Erzeugen eines Kaffeegetränks in Form von Espresso zu ermöglichen. Zu diesem Zweck ist die Brühvorrichtung 30 mit einem Cremaventil 38 ausgestattet, welches das Austreten einer in der Brühkammer 36 befindlichen Flüssigkeit aus dem Kammerauslass 37 der Brühkammer 36 kontrolliert, sodass eine Flüssigkeit aus der Brühkammer 38 über den Kammerauslass 37 und das Cremaventil 38 nur dann in die Kaffee-Ausgabeleitung 40 fliessen und zur Kaffee-Ausgangsöffnung 47 gelangen kann, wenn der Druck der Flüssigkeit am Kammerauslass 37 einen vorgegebenen Grenzwert erreicht bzw. überschreitet. Dieser Grenzwert kann beispielsweise im Bereich von 3-9 bar liegen kann, um das Erzeugen eines Kaffeegetränks in Form von Espresso zu ermöglichen. Um zu erreichen, dass das Mahlgut in der Brühkammer mit Brühwasser unter einem Druck im Bereich von 3-9 bar gebrüht werden kann, ist die Brühwasserpumpe 23 im vorliegenden Beispiel dazu ausgelegt, Brühwasser mit einem Druck von beispielsweise 15 bar der Brühwasser-Zufuhrleitung 31 zuzuführen.

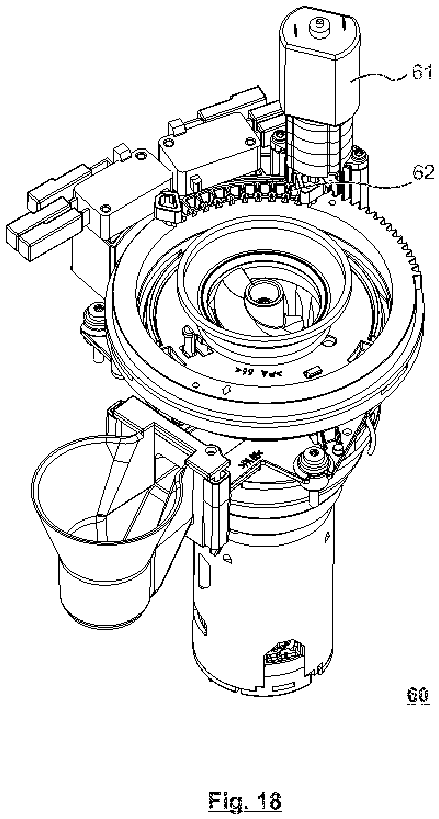

Der Kaffeeautomat 10 ist gemäss der Variante nach Fig. 1 ausserdem mit einem automatisch verstellbaren Mahlwerk 60 ausgestattet, wie es in Fig. 18 perspektivisch dargestellt ist. Das automatisch verstellbare Mahlwerk 60 weist einen Stellmotor 61 auf, welcher dazu ausgebildet ist, über ein Stellgetriebe 62 den Mahlgrad automatisch einzustellen. Es ist hierbei möglich, den Mahlgrad zwischen verschiedenen Mahlvorgängen automatisch den tatsächlichen Gegebenheiten anzupassen, beispielsweise dem Röstgrad der Kaffeebohnen oder deren Feuchtigkeitsgehalt. Es ist aber auch möglich, den Mahlgrad gemäss einer gewählten (vorgebbaren) Einstellung umzustellen. Die gewählte Einstellung kann sich auf die Angabe des Mahlgrades selbst beziehen; es kann jedoch auch eine Einstellung wählbar sein, welche sich mittelbar auf den einzustellenden Mahlgrad auswirkt, wie z. B. die Art eines auszugebenden Kaffeegetränkes.

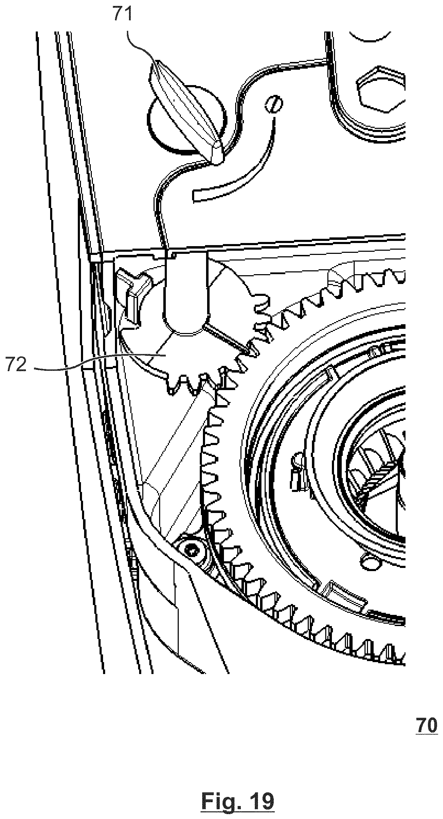

Bei anderen Varianten kann der Kaffeeautomat 10 alternativ mit einem manuell verstellbaren Mahlwerk 70 ausgestattet sein, welches in der Fig. 19 gezeigt ist. Dieses weist eine Verstelleinrichtung 71 auf, welche von einer Bedienperson verstellbar ist und mechanisch mit einem Stellgetriebe 72 verbunden ist, um den Mahlgrad einzustellen.

Ein verstellbares Mahlwerk 60, 70 ist jedoch nicht notwendig, um das erfindungsgemässe Verfahren sinnvoll durchführen zu können; so kann es auch vorgesehen sein, das erfindungsgemässe Verfahren bei Kaffeeautomaten zu verwenden, die manuell mit Kaffeepulver befüllt werden, welches unterschiedliche Mahlgrade aufweisen kann. Ausserdem kann es auch dann, wenn das Mahlwerk nicht verstellbar ausgebildet ist, zu Schwankungen des Mahlgrades kommen, z. B. dann, wenn die zu mahlenden Kaffeebohnen unterschiedliche Feuchtigkeitsgrade oder dergleichen aufweisen.

Die Ausführung des erfindungsgemässen Verfahrens wird zu Beginn eines Brühvorganges in Gang gesetzt, typischerweise nachdem die Brühkammer 36 mit frischem Kaffeemehl (Mahlgut) befüllt wurde. Diese und weitere Massnahmen, die nicht unmittelbar mit dem erfindungsgemässen Verfahren zusammenhängen, wie z. B. ein automatischer Mahlvorgang, das Befüllen der Brühkammer 36 mit Kaffeemehl, eine Messung des gesamten Kaffeevolumens während des Brühvorganges zum passenden Beenden des Vorgangs, der Auswurf des verbrauchten Kaffeekuchens und dergleichen können beispielsweise von der Steuereinheit 50 vorgenommen werden.

Zur Ausführung des erfindungsgemässen Verfahrens steuert die Pumpen-Steuerungseinrichtung 50-1 nun zunächst die Brühwasserpumpe 23 während eines ersten Zuführungszeitraums so an, dass Brühwasser gemäss einem ersten Brühwasser-Zuführungsmodus kontinuierlich an den Brühwassereinlass 35 zugeführt wird. Der erste Zuführungszeitraum ist typischerweise relativ kurz, z. B. kürzer als drei Sekunden oder kürzer als fünf Sekunden, und er dient dazu, die Ermittlung einer Brühwasser-Kenngrösse in einem sich anschliessenden zweiten Zuführungszeitraum zu erlauben. Dieses Ermitteln erfolgt in der Regel mit Hilfe der Druckmesseinrichtung 51 und/oder mit Hilfe der Durchflussmesseinrichtung 52.

Im zweiten Zuführungszeitraum wird in einer Schleifenverarbeitung fortlaufend die Brühwasser-Kenngrösse ermittelt, eine Modus-Einstellgrösse für einen zweiten Brühwasser-Zuführungsmodus wird eingestellt, und Brühwasser wird dem Brühwassereinlass 35 gemäss dem zweiten Brühwasser-Zuführungsmodus zugeführt. Die Modus-Einstellgrösse wird bei der dargestellten Variante von der Pumpen-Steuereinrichtung 50-1 eingestellt, und zwar auf Basis der Brühwasser-Kenngrösse, welche sie aus den Messwerten von der Druckmesseinrichtung 51 und/oder von der Durchflussmesseinrichtung 52 ableitet. Die Modus-Einstellgrösse definiert zumindest einen kontinuierlichen Modus für den zweiten Brühwasser-Zuführungsmodus sowie einen Impulsmodus für den zweiten Brühwasser-Zuführungsmodus; der kontinuierliche Modus und/oder der Impulsmodus wird bzw. werden durch eine entsprechende Ansteuerung (eine kontinuierliche Ansteuerung bzw. eine gepulste Ansteuerung) der Brühwasserpumpe 23 durch die Pumpen-Steuerungseinrichtung 50-1 durchgeführt.

Dementsprechend ist die Pumpensteuereinrichtung 50-1 ausgebildet ist, die Pumpe 23 mit einem Impulssignal anzusteuern, welches mehrere aufeinanderfolgende Impulse enthält, wobei die Pumpe 23 durch Ansteuern mit einem der Impulse angeschaltet wird und in einer Impuls-Pause zwischen zwei aufeinanderfolgenden Impulsen jeweils ausgeschaltet wird, um das Zuführen des Brühwassers im Impulsmodus zu ermöglichen.

Bei den nachfolgend beschriebenen Varianten des erfindungsgemässen Verfahrens wird jeweils nur der Ablauf während des zweiten Zuführungszeitraums beschrieben.

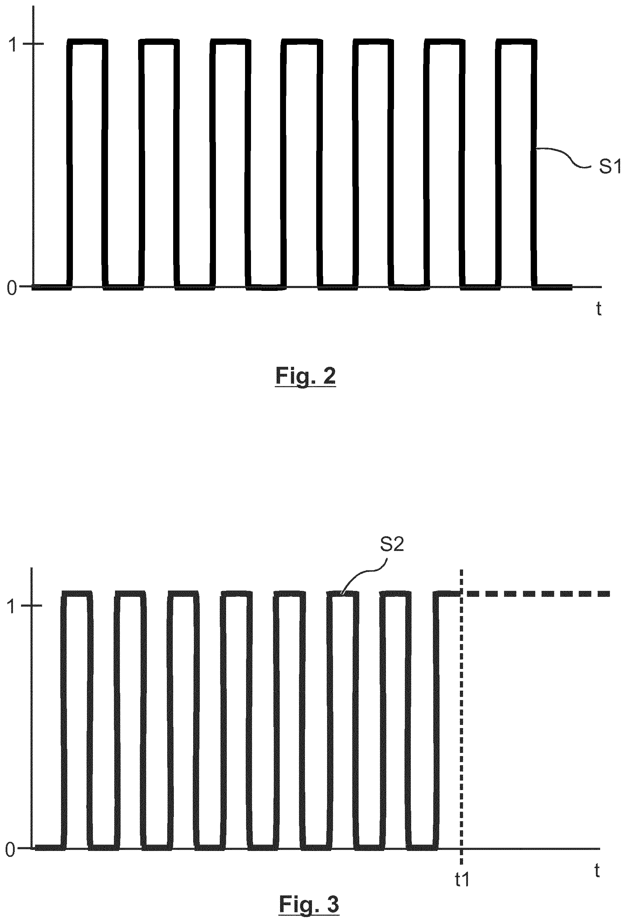

Fig. 2 zeigt den zeitlichen Verlauf eines (Impuls-) Signals S1, d.h. das Signal S1 als Funktion der Zeit t. Das Signal S1 wird von der Pumpen-Steuereinrichtung 50-1 erzeugt und über die Steuersignalverbindung LS der Brühwasserpumpe 23 zugeführt. Während sich das Signal S1 auf dem hohen Signalpegel befindet (dieser ist auf der Hochachse dimensionslos mit "1" bezeichnet), ist die Brühwasserpumpe 23 eingeschaltet. Entsprechend ist dann, wenn sich das Signal S1 auf dem niedrigen Signalpegel befindet (dieser ist auf der Hochachse dimensionslos mit "0" bezeichnet), die Brühwasserpumpe 23 ausgeschaltet. Die Zeitdauer eines einzelnen Einschaltzeitraums (die Impuls-Einschaltzeit) ist bei dem in Fig. 2 gezeigten Beispiel in etwa gleich der Zeitdauer eines einzelnen Ausschaltzeitraums (der Impuls-Pausenzeit). Die Impulsdauer eines einzelnen Impulses (deren Impuls-Einschaltzeit) beträgt in dem Beispiel gemäss Fig. 2 ungefähr 0.1 Sekunden.

Für den in Fig. 2 gezeigten Signalverlauf S1 wurde bei der Durchführung des erfindungsgemässen Verfahrens eine Brühwasser-Kenngrösse ermittelt, welche darauf hindeutet, dass durch ein entsprechendes impulsmässiges Ansteuern der Brühwasserpumpe 23 ein vorteilhafter Verlauf des Brühvorganges erfolgen könnte. Beispielsweise wurde festgestellt, dass der von der Druckmesseinrichtung 51 ermittelte Messwert für den Druck P oberhalb eines Schwellenwertes lag, oder es wurde alternativ oder zusätzlich festgestellt, dass der Volumenstrom-Messwert aus der Durchflussmesseinrichtung 52 unterhalb eines Schwellenwertes lag. Beides kann darauf hindeuten, dass der Mahlgrad des Mahlgutes innerhalb der Brühkammer 36 derart fein ist, dass ein Durchtritt des Brühwassers erschwert ist. Durch den Impulsverlauf ist es möglich, einen solchen Durchtritt zu erleichtern.

Fig. 3 zeigt den Verlauf eines Signals S2, wie es gemäss einer weiteren Alternative zum Ansteuern der Brühwasserpumpe 23 dienen kann. Im Wesentlichen gilt für das Signal S2 das im Zusammenhang mit dem Signal S1 Beschriebene. Im Unterschied dazu ist jedoch bei dem Signal S2 gemäss Fig. 3 vorgesehen, dass zu einem Zeitpunkt t1, nach einem Zeitraum im Impulsmodus, eine Brühwasser-Kenngrösse ermittelt wird, welche darauf hindeutet, dass durch einen kontinuierlichen Betrieb der Brühwasserpumpe 23 ein vorteilhafter Verlauf des Brühvorganges erfolgen könnte. Beispielsweise wurde festgestellt, dass der von der Druckmesseinrichtung 51 ermittelte Messwert für den Druck P wieder unter einen Schwellenwert gefallen ist, oder es wurde alternativ oder zusätzlich festgestellt, dass der Volumenstrom-Messwert aus der Durchflussmesseinrichtung 52 über einen Schwellenwert gestiegen ist. Beides kann darauf hindeuten, dass durch den vorhergehenden Impulsmodus ein Durchtritt von Brühwasser durch das Mahlgut in der Brühkammer nun auch wieder durch kontinuierliche Brühwasserzufuhr erfolgen kann. Der kontinuierliche Betrieb der Brühwasserpumpe 23 ab dem Zeitpunkt t1 ist durch eine gestrichelte Linie des Signals S8 ab diesem Zeitpunkt angedeutet.

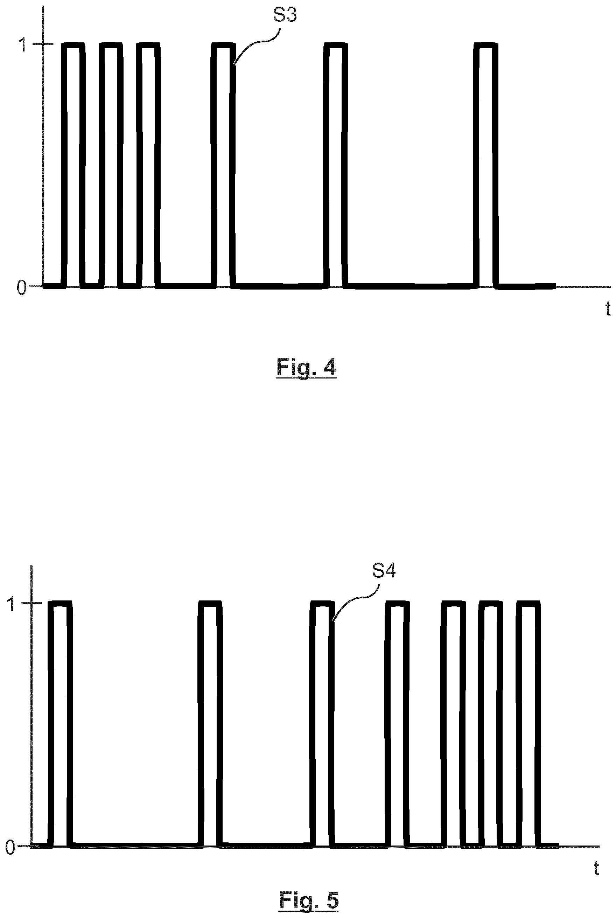

Fig. 4 zeigt analog zu den Fig. 2 und 3 einen Signalverlauf S3. Die Impuls-Einschaltzeit ist über den Signalverlauf S3 hinweg unverändert; allerdings wird die Impuls-Pausendauer nach einigen Impulsen (im gezeigten Beispiel: nach drei Impulsen) verlängert. Dies entspricht einem progressiven Zeitverlauf der Impuls-Pausendauer. Ein solcher Signalverlauf kann zu einem vorteilhaften Durchtritt von Brühwasser durch die Brühkammer 36 während des zweiten Zuführungszeitraums beitragen.

Fig. 5 zeigt analog zu den Fig. 2 bis 4 einen Signalverlauf S4. Die Impuls-Einschaltzeit ist über den Signalverlauf S4 hinweg wieder unverändert; allerdings wird die Impuls-Pausendauer im Zeitverlauf verkürzt. Dies entspricht einem degressiven Zeitverlauf der Impuls-Pausendauer. Ein solcher Signalverlauf kann zu einem vorteilhaften Durchtritt von Brühwasser durch die Brühkammer 36 während des zweiten Zuführungszeitraums beitragen.

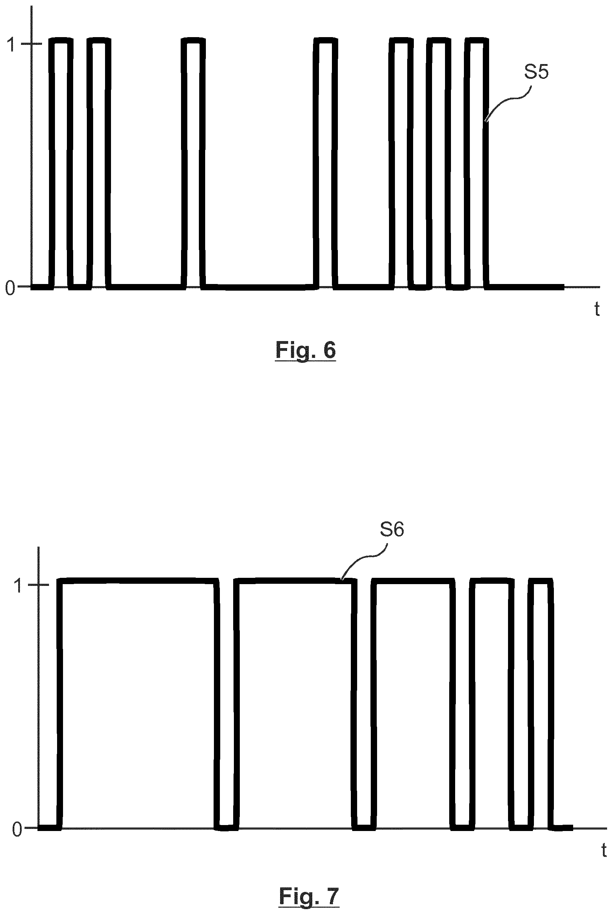

Fig. 6 zeigt analog zu den Fig. 2 bis 5 einen Signalverlauf S5. Die Impuls-Einschaltzeit ist über den Signalverlauf S5 hinweg wieder unverändert; allerdings folgt die Impuls-Pausendauer einem progressiv-degressivem Zeitverlauf. Ein solcher Signalverlauf kann zu einem vorteilhaften Durchtritt von Brühwasser durch die Brühkammer 36 während des zweiten Zuführungszeitraums beitragen.

Fig. 7 zeigt analog zu den Fig. 2 bis 6 einen Signalverlauf S6. Die Impuls-Pausendauer ist über den Signalverlauf S6 hinweg unverändert. Die Impuls-Einschaltzeit wird über den Signalverlauf S6 allerdings verkürzt, was einem degressiven Zeitverlauf der Impuls-Einschaltzeit entspricht. Ein solcher Signalverlauf kann zu einem vorteilhaften Durchtritt von Brühwasser durch die Brühkammer 36 während des zweiten Zuführungszeitraums beitragen.

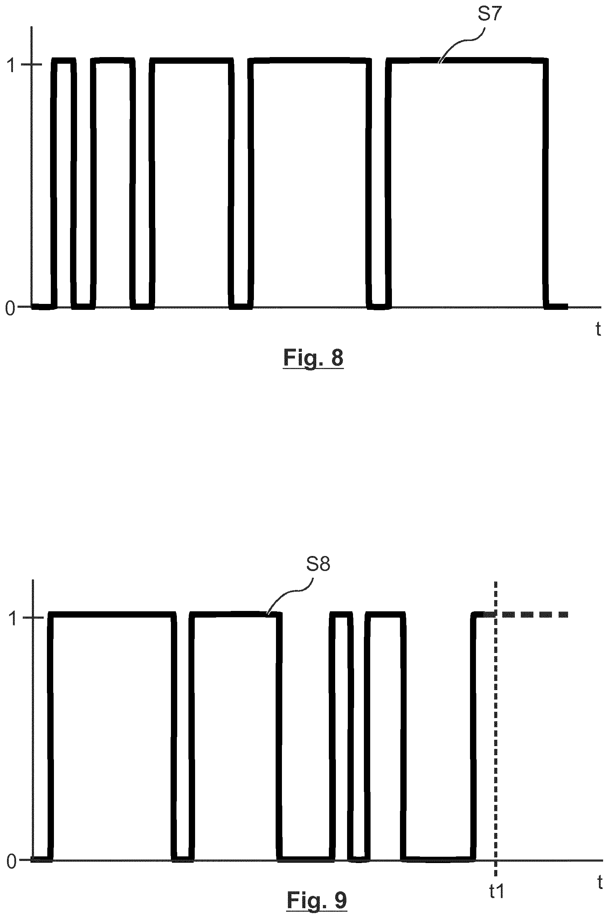

Fig. 8 zeigt analog zu den Fig. 2 bis 7 einen Signalverlauf S7. Die Impuls-Pausendauer ist über den Signalverlauf S7 hinweg unverändert. Die Impuls-Einschaltzeit wird über den Signalverlauf S6 allerdings verlängert, was einem progressiven Zeitverlauf der Impuls-Einschaltzeit entspricht. Ein solcher Signalverlauf kann zu einem vorteilhaften Durchtritt von Brühwasser durch die Brühkammer 36 während des zweiten Zuführungszeitraums beitragen.

Fig. 9 zeigt analog zu den Fig. 2 bis 8 einen Signalverlauf S8. Bei dem Signalverlauf S8 werden sowohl die Impuls-Einschaltzeit, als auch die Impuls-Pausendauer über den Zeitverlauf hinweg verändert (mehrfach variabler Impulsmodus). Ausserdem gilt, analog zu dem Signalverlauf S2, der in Fig. 3 gezeigt ist, dass zu einem Zeitpunkt t1, nach einem Zeitraum in dem oben beschriebenen mehrfach variablen Impulsmodus eine Brühwasser-Kenngrösse ermittelt wird, welche darauf hindeutet, dass durch einen kontinuierlichen Betrieb der Brühwasserpumpe 23 ein vorteilhafter Verlauf des Brühvorganges erfolgen könnte. Ab dem Zeitpunkt t1 erfolgt daher bei dem Signalverlauf S8 ein kontinuierlicher Betrieb der Brühwasserpumpe 23, was durch die gestrichelte Linie in Fig. 9 angedeutet ist. Ein solcher Signalverlauf kann zu einem vorteilhaften Durchtritt von Brühwasser durch die Brühkammer 36 während des zweiten Zuführungszeitraums beitragen.

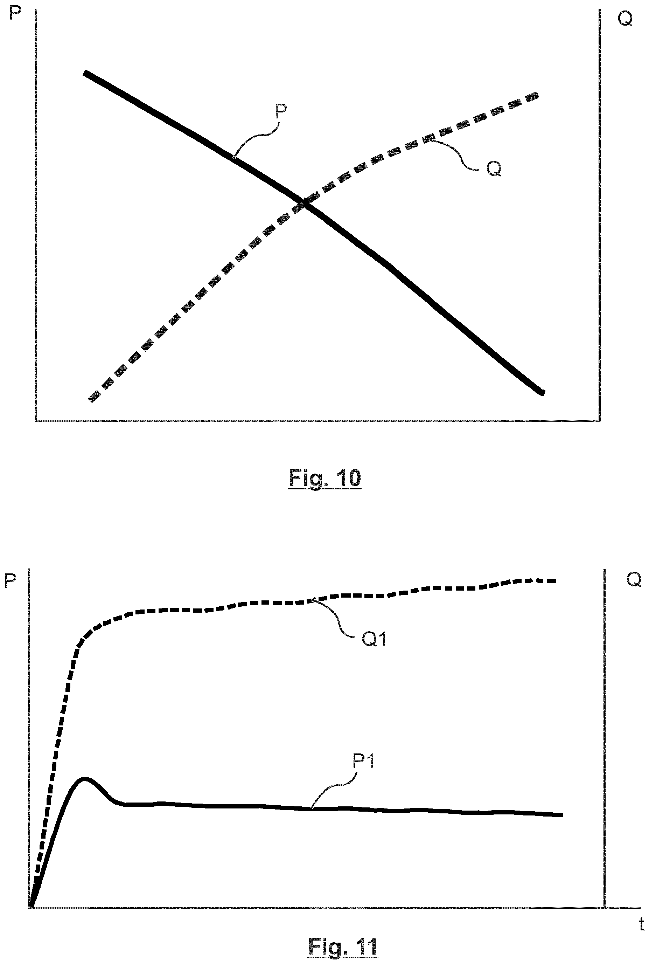

Aus Gründen der Übersichtlichkeit und zur besseren Vergleichbarkeit sind die schematischen Diagramme in den Fig. 10 bis 17 als Diagramme mit doppelten Hochachsen gezeigt, und in den Diagrammen sind jeweils sowohl der Druck P bzw. der zeitliche Verlauf des Drucks P, als auch der Durchfluss (Volumenstrom) Q bzw. der zeitliche Verlauf des Durchflusses Q dargestellt. Die Kurven, welche den Druck bzw. den Druckverlauf zeigen, sind mit durchgezogenen Linien dargestellt und mit P bzw. P1 bis P7 bezeichnet. Entsprechend sind die Kurven, welche den Durchfluss bzw. den Durchflussverlauf zeigen, mit gestrichelten Linien dargestellt und mit Q bzw. Q1 bis Q7 bezeichnet. Obwohl keine Massstäbe für die Achsen des Drucks (P) oder für die Achsen des Durchflusses (Q) angegeben sind, sind die relativen Darstellungen der Druckverläufe bzw. der Durchflussverläufe zwischen den einzelnen Diagrammen vergleichbar.

Fig. 10 zeigt eine schematische Darstellung von Druck P und Durchfluss Q in Abhängigkeit von dem Mahlgrad, wenn die Pumpenleistung über den gesamten Brühvorgang hinweg konstant ist. Das erfindungsgemässe Verfahren wird also bei einem Kurvenverlauf gemäss Fig. 10 nicht angewendet. Die Kurven verlaufen von links nach rechts von einem feinen Mahlgrad zu einem groben Mahlgrad. Wie zu erkennen ist, ist der Druck P bei einem feinen Mahlgrad und konstanter Pumpenleistung hoch, um hin zu einem gröberen Mahlgrad abzunehmen. Die Kurve für den Durchfluss ist gegenläufig: Bei einem feinen Mahlgrad ist der Durchfluss gering, um hin zu einem gröberen Mahlgrad zuzunehmen.

Fig. 11 zeigt nun eine schematische Darstellung von Druck P und Durchfluss Q im Zeitverlauf bei grobem Mahlgrad und über den gesamten Brühvorgang hinweg konstanter Pumpenleistung, also ohne dass das erfindungsgemässe Verfahren zum Einsatz kommt. Der zeitliche Verlauf des Drucks ist im vorliegenden Beispiel mit P1 und der zeitliche Verlauf des Durchflusses mit Q1 Bezeichnet. Der Druck P1 nimmt im zeitlichen Verlauf zu, bis ein gewisser Wert überschritten ist, fällt dann leicht ab und ist über den weiteren Zeitverlauf des Brühvorgangs hinweg im Wesentlichen konstant. Die Durchflussmenge Q1 nimmt ebenfalls erst zu, um auch im Wesentlichen konstant zu sein. Für den gezeigten gröberen Mahlgrad des Mahlgutes zeigen diese Kurven einen wünschenswerten Verlauf.

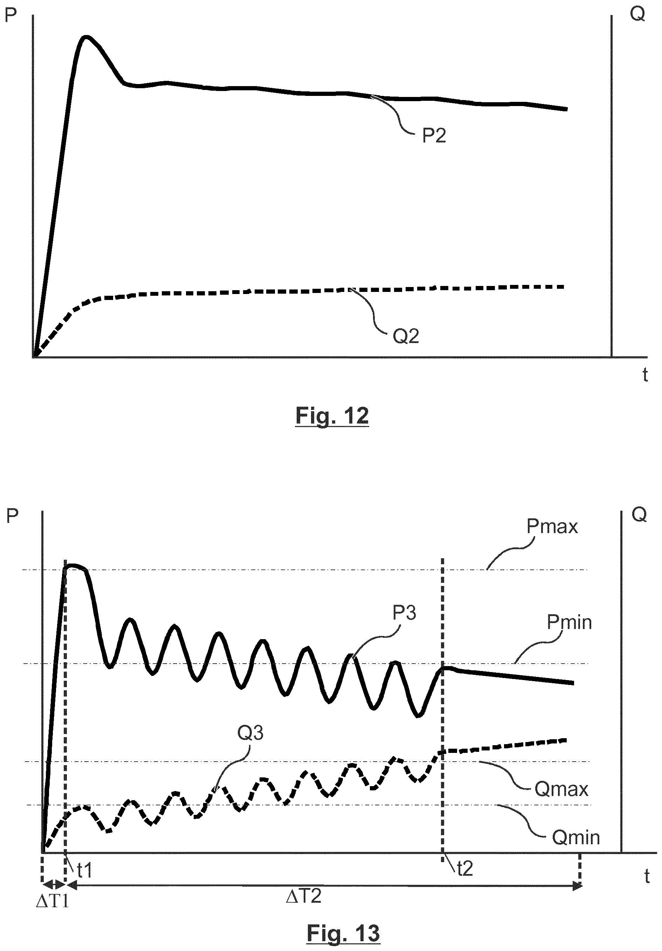

Analog zu Fig. 11 zeigt Fig. 12 eine schematische Darstellung von Druck P und Durchfluss Q im Zeitverlauf bei feinem Mahlgrad und über den gesamten Brühvorgang hinweg konstanter Pumpenleistung, also wiederum ohne dass das erfindungsgemässe Verfahren zum Einsatz kommt. Der zeitliche Verlauf des Drucks ist im vorliegenden Beispiel mit P2 und der zeitliche Verlauf des Durchflusses mit Q2 Bezeichnet. Bei einem feinen Mahlgrad kann das verwendete Kaffeemehl in der Brühkammer 36 wesentlich stärker komprimiert werden, so dass der Durchtritt von Brühwasser erschwert ist: Der Druck P2 nimmt im zeitlichen Verlauf wesentlich stärker als in dem Fall der Fig. 11 zu; die Durchflussmenge Q2 bleibt entsprechend gering.

Fig. 13 zeigt nun eine schematische Darstellung von Druck P und Durchfluss Q im Zeitverlauf bei sehr feinem Mahlgrad und einem zeitweiligen Betrieb der Pumpe im Impulsmodus gemäss dem erfindungsgemässen Verfahren. Der Mahlgrad ist hier noch feiner als bei der in Fig. 12 gezeigten Kurve. Es hat sich gezeigt, dass bei einem derart feinen Mahlgrad, wie er für einen Brühverlauf gemäss den in der Fig. 13 gezeigten Signalen zum Einsatz kommt, der Druck des zugeführten Brühwassers exzessiv hoch sein müsste, bevor es überhaupt zu einem Durchtritt von Brühwasser durch die Brühkammer 36 kommen könnte. Falls bei einem derart feinen Mahlgrad des Mahlguts die Pumpe 23 derart angesteuert wird, dass sie das Brühwasser unter dem üblicherweise zur Verfügung stehend Druck dem Brühkammer-Einlass 45 kontinuierlich zuführt, dann wäre der Volumenstrom des Brühwassers, welcher das Mahlgut in der Brühkammer gegebenenfalls durchströmen kann, auf unakzeptable Weise gering, wobei sogar die Gefahr besteht, dass die Brühkammer 36 verstopft.

In Fig. 13 geben Qmin und Qmax nun einen unteren Schwellenwert bzw. einen oberen Schwellenwert für den Durchfluss Q an; entsprechend geben Pmin und Pmax einen unteren Schwellenwert bzw. einen oberen Schwellenwert für den Druck P an. Der zeitliche Verlauf des Drucks ist im vorliegenden Beispiel mit P3 und der zeitliche Verlauf des Durchflusses mit Q3 Bezeichnet.

Zu Beginn des Brühvorganges, bis zu dem Zeitpunkt, der in Fig. 13 mit t1 bezeichnet ist, wird die Brühwasserpumpe 23 kontinuierlich betrieben. Dies entspricht dem ersten Zuführungszeitraum, dessen Dauer in Fig. 13 mit einem mit Bezugszeichen ΔT1 bezeichneten Doppelpfeil dargestellt ist, wobei die beiden Enden des Doppelpfeils den Anfang und das Ende des ersten Zuführungszeitraums ΔT1 andeuten. Anschliessend übermittelt die Druckmesseinrichtung 51 an die Pumpen-Steuerungseinrichtung 50-1 einen Messwert, der oberhalb des oberen Schwellenwertes Pmax für den Druck liegt. Gleichzeitig übermittelt die Durchflussmesseinrichtung 52 an die Pumpen-Steuerungseinrichtung 50-1 einen Messwert, der unterhalb des unteren Schwellenwertes Qmin für den Durchfluss liegt.

Hieraus leitet die Pumpen-Steuerungseinrichtung 50-1, die sich ab dem Zeitpunkt t1 im zweiten Zuführungszeitraum befindet, eine Brühwasser-Kenngrösse ab, welche darauf hindeutet, dass ein Betrieb im Impulsmodus vorteilhaft ist. In Fig. 13 ist die Dauer des zweiten Zuführungszeitraums mit einem mit Bezugszeichen ΔT2 bezeichneten Doppelpfeil dargestellt, wobei die beiden Enden des Doppelpfeils den Anfang und das Ende des zweiten Zuführungszeitraums ΔT2 andeuten. Die Pumpen-Steuerungseinrichtung 50-1 stellt demnach die Modus-Einstellgrösse so ein, dass das Zuführen des Brühwassers in einem Impulsmodus erfolgt, welcher hier dem zweiten Brühwasser-Zuführungsmodus des Verfahrens entspricht.

Das impulsweise Zuführen ist durch die Schwankungen des Druckverlaufs P3 und des Verlaufs Q3 für den Durchfluss in Fig. 13 erkennbar. Es wird davon ausgegangen, dass durch das Betreiben im Impulsmodus auf das Mahlgut gewisse Stösse ausgeübt werden, welche das Mahlgut nach und nach lockern und das Hindurchtreten von Brühwasser erleichtern. Währenddessen wird die Brühwasser-Zuführung im Impulsmodus fortgesetzt und fortlaufend die Brühwasser-Kenngrösse anhand der Messdaten von den Messeinrichtungen 51 und 52 neu bewertet.

Wie ersichtlich, bewirkt die impulsweise Zufuhr des Brühwassers im Zeitraum t1 < t < t2, dass der Volumenstrom Q3 des der Brühkammer zugeführten Brühwasser in diesem Zeitraum (über die Zeit gemittelt) stetig mit der Zeit relativ stark ansteigt. Entsprechend fällt der Druck P3 am Brühkammer-Einlass 35 im Zeitraum t1 < t < t2 (über die Zeit gemittelt) stetig mit der Zeit relativ stark ab. Demensprechend reduziert die impulsweise Zufuhr des Brühwassers die Gefahr einer Verstopfung der Brühkammer 36 (welche, wie erwähnt, im vorliegenden Fall vorhanden ist, wenn die Pumpe 23 derart angesteuert wird, dass sie das Brühwasser kontinuierlich zuführt).

Ein ausreichender Lockerungszustand wird während des zweiten Zuführungszeitraum ΔT2 zum Zeitpunkt t2 dadurch erkannt, dass das Messsignal Q3 einen oberen Schwellenwert Qmax für den Durchfluss überschreitet und das Messsignal P3 einen unteren Schwellenwert Pmin für den Druck unterschreitet.

Die Pumpen-Steuerungseinrichtung 50-1 stellt demnach die Modus-Einstellgrösse so ein, dass ab dem Zeitpunkt t2 das Zuführen des Brühwassers im kontinuierlichen Modus erfolgt. Dadurch kann der weitere Kaffeebezug beschleunigt werden.

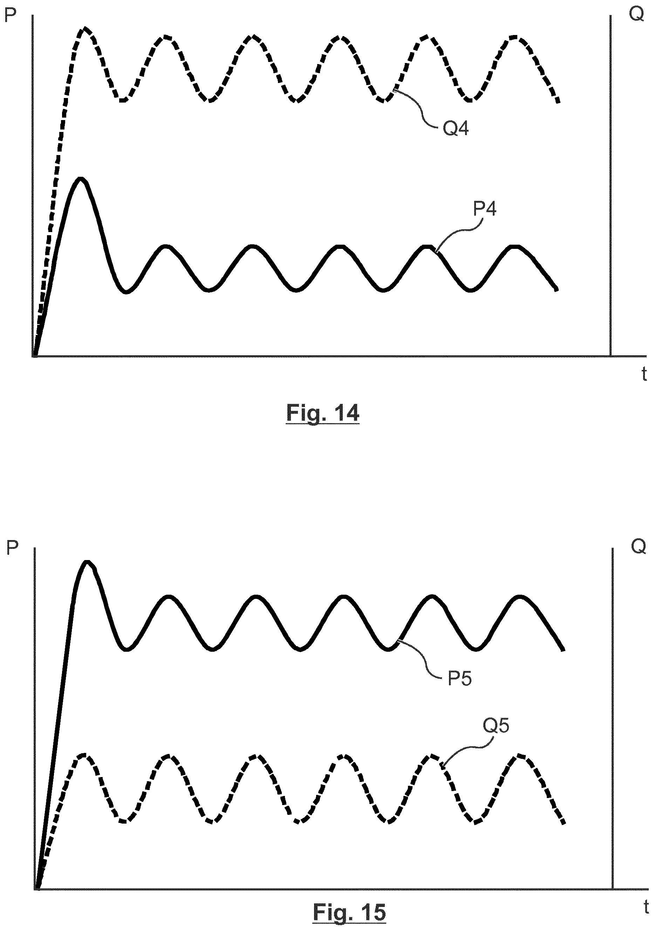

Fig. 14 zeigt eine schematische Darstellung von Druck P und Durchfluss Q im Zeitverlauf bei grobem Mahlgrad und Betrieb der Pumpe im Impulsmodus mit kurzer Impulsdauer. Der zeitliche Verlauf des Drucks ist im vorliegenden Beispiel mit P4 und der zeitliche Verlauf des Durchflusses mit Q5 bezeichnet. Im dargestellten Fall der Fig. 14 und 15 finden gleichförmige Impulse Verwendung, bei welchen die Impuls-Einschaltdauer und die Impuls-Pausendauer gleich lang sind. Die Einschaltdauer und die Pausendauer der Impulse bei kurzer Impulsdauer betragen jeweils ungefähr 0,1 bis 0,2 Sekunden. Analog zu Fig. 14 zeigt Fig. 15 eine schematische Darstellung von Druck P5 und Durchfluss Q5 im Zeitverlauf bei feinem Mahlgrad und Betrieb der Pumpe im Impulsmodus mit kurzer Impulsdauer. Es zeigt sich, dass trotz feinen Mahlgrads ein Durchfluss Q5 gegeben ist, wenn die Brühwasser-Zufuhr im zweiten Zuführungszeitraum mit kurzen Impulsen erfolgt.

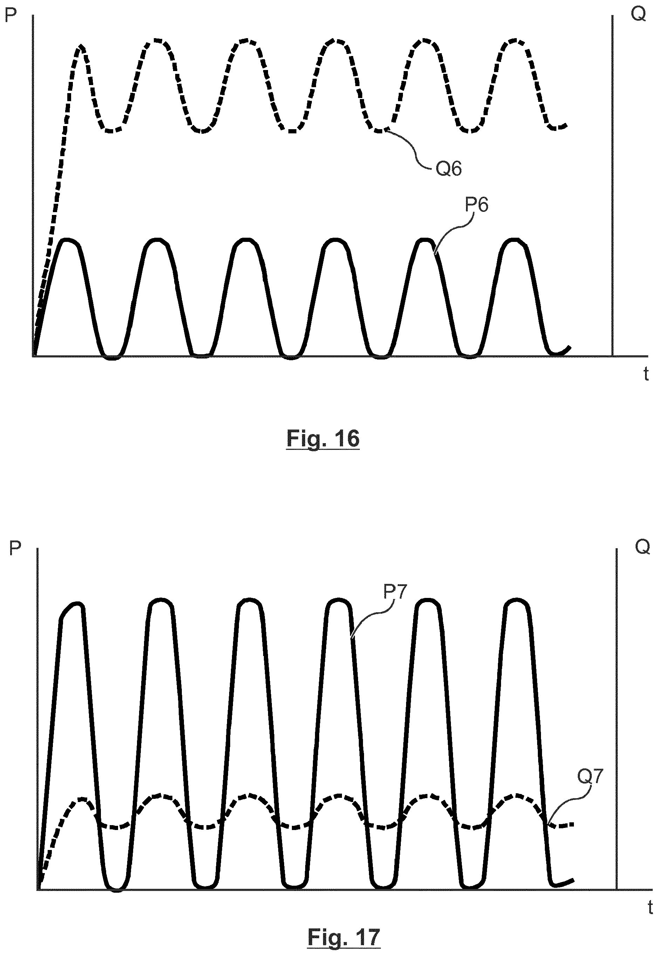

Fig. 16 zeigt analog zu den Fig. 14 und 15 eine schematische Darstellung von Druck P und Durchfluss Q im Zeitverlauf bei grobem Mahlgrad und Betrieb der Pumpe im Impulsmodus mit langer Impulsdauer. Der zeitliche Verlauf des Drucks ist im vorliegenden Beispiel mit P6 und der zeitliche Verlauf des Durchflusses mit Q6 Bezeichnet. Im dargestellten Fall der Fig. 16 und 17 finden gleichförmige Impulse Verwendung, bei welchen die Impuls-Einschaltdauer und die Impuls-Pausendauer gleich lang sind. Bei einer langen Impulsdauer betragen die Einschaltdauer und die Pausendauer der Impulse jeweils bis zu ungefähr 2 Sekunden. Es zeigt sich, dass hier der Druck P6 in den Impulspausen zwar stärker abfällt als bei den kurzen Impulsen gemäss Fig. 14; dennoch ist ein ausreichender Durchfluss Q6 auch bei langen Impulsen gegeben. Fig. 17 zeigt schliesslich analog zu Fig. 16 eine schematische Darstellung von Druck P und Durchfluss Q im Zeitverlauf bei feinem Mahlgrad und Betrieb der Pumpe im Impulsmodus mit langer Impulsdauer. Der zeitliche Verlauf des Drucks ist im vorliegenden Beispiel mit P7 und der zeitliche Verlauf des Durchflusses mit Q7 bezeichnet. Die Druckschwankungen sind wiederum stark; dennoch ergibt sich auch hier ein zuverlässiger Durchfluss Q7 über den Zeitverlauf.
Hinsichtlich des Zuführens des Brühwassers im Impulsmodus ist es deshalb vorteilhaft, wenn die Pumpensteuereinrichtung 50-1 die Pumpe 23 im zweiten Zuführungszeitraum ΔT2 mit einem Impulssignal ansteuert, bei welchem die jeweiligen Impuls-Pausen zwischen zwei aufeinanderfolgenden Impulsen eine Dauer im Bereich von 0.05 bis 2 Sekunden aufweisen. Unter diesen Umständen bewirkt das impulsweise Zuführen von Brühwasser im Falle von Mahlgut mit besonders feinem Mahlgrad einerseits einen erhöhten Durchfluss des Brühwassers durch die Brühkammer während des Brühens und wirkt somit einer Verstopfung der Brühkammer 36 entgegen (wie im Zusammenhang mit Fig. 13 erwähnt). Bei Impuls-Pausen mit einer Dauer von weniger als 2 Sekunden ist es ferner möglich, das Mahlgut trotz der Schwankungen des Brühwasser-Drucks, welche beim impulsweisen Zuführen des Brühwassers auftreten (Fig. 14-17), bei einem relativ grossen "gemittelten" Druck (entsprechend einem über die Zeit gemittelten Mittelwert des Drucks des Brühwassers in der Brühkammer 36) zu brühen. Letzteres ist insbesondere relevant im Hinblick auf die Erzeugung von Getränken, welche ein Brühen des Mahlguts unter einem relativ grossen Druck erfordern (z.B. im Falle von Espresso).

## Patentansprüche

1. Verfahren zum Erzeugen eines Kaffeegetränks in einer Brühvorrichtung (30) eines Kaffeeautomaten (10),
wobei die Brühvorrichtung (30) eine Brühkammer (36) zum Aufnehmen von Mahlgut, insbesondere von gemahlenem Kaffee, aufweist,
wobei die Brühkammer (36) einen Brühwassereinlass (35) und einen Kammerauslass (37) aufweist,
wobei das Verfahren die folgenden Verfahrensschritte aufweist:
a) Während eines ersten Zuführungszeitraums (ΔT1): Zuführen von unter einem Druck stehenden Brühwasser an den Brühwassereinlass (35) gemäss einem ersten Brühwasser-Zuführungsmodus, in welchem das Brühwasser kontinuierlich an den Brühwassereinlass (35) zugeführt wird;
b) Während eines zweiten Zuführungszeitraums (ΔT2):
b1) Ermitteln einer Brühwasser-Kenngrösse, die mit dem Volumenstrom (Q, Q3) und/oder mit dem Druck (P, P3) des an den Brühwassereinlass (35) zugeführten Brühwassers zusammenhängt, und Einstellen, unter Verwendung der Brühwasser-Kenngrösse, einer Modus-Einstellgrösse für einen zweiten Brühwasser-Zuführungsmodus;
b2) Zuführen von Brühwasser an den Brühwassereinlass (35) gemäss dem zweiten Brühwasser-Zuführungsmodus,
wobei die Modus-Einstellgrösse zumindest einen kontinuierlichen Modus für den zweiten Brühwasser-Zuführungsmodus, in welchem das Brühwasser kontinuierlich an den Brühwassereinlass (35) zugeführt wird, und einen Impulsmodus für den zweiten Brühwasser-Zuführungsmodus, in welchem das Brühwasser impulsweise an den Brühwassereinlass (35) zugeführt wird, definiert und
wobei das Einstellen der Modus-Einstellgrösse für den zweiten Brühwasser-Zuführungsmodus zumindest eine Auswahl zwischen dem kontinuierlichen Modus für den zweiten Brühwasser-Zuführungsmodus und dem Impulsmodus für den zweiten Brühwasser-Zuführungsmodus in Abhängigkeit von der Brühwasser-Kenngrösse umfasst,
**dadurch gekennzeichnet, dass**
die zumindest eine Auswahl zwischen dem kontinuierlichen Modus für den zweiten Brühwasser-Zuführungsmodus und dem Impulsmodus für den zweiten Brühwasser-Zuführungsmodus mindestens einen der folgenden Schritte c) bis d) umfasst:
c) Messen eines Drucks (P, P3) des an den Brühwassereinlass (35) zugeführten Brühwassers am Brühwassereinlass (35) und Auswählen des Impulsmodus oder des kontinuierlichen Modus für den zweiten Brühwasser-Zuführungsmodus in Abhängigkeit von dem gemessenen Druck (P, P3), wobei der Impulsmodus gewählt wird, wenn der gemessene Druck (P, P3) am Brühwasser-Einlass (35) einen vorab festgelegten oder festlegbaren Druck-Schwellenwert (Pmax) überschreitet, und der kontinuierliche Modus gewählt wird, wenn der gemessene Druck (P, P3) am Brühwasser-Einlass (35) einen vorab festgelegten oder festlegbaren Druck-Schwellenwert (Pmin) unterschreitet; und/oder
d) Messen eines Volumenstroms (Q, Q3) des an den Brühkammer-Einlass (35) zugeführten Brühwassers und/oder eines Volumenstroms einer aus dem Kammerauslass (37) austretenden Flüssigkeit und Auswählen des Impulsmodus oder des kontinuierlichen Modus für den zweiten Brühwasser-Zuführungsmodus in Abhängigkeit von dem gemessenen Volumenstrom (Q, Q3) des an den Brühkammer-Einlass (35) zugeführten Brühwassers und/oder dem gemessenen Volumenstrom der aus dem Kammerauslass (37) austretenden Flüssigkeit, wobei der Impulsmodus ausgewählt wird, wenn der gemessene Volumenstrom (Q, Q3) des an den Brühkammer-Einlass (35) zugeführten Brühwassers und/oder der gemessene Volumenstrom der aus dem Kammerauslass austretenden Flüssigkeit einen vorab festgelegten oder festlegbaren Volumenstrom-Schwellenwert (Qmin) unterschreitet bzw. unterschreiten, und der kontinuierliche Modus gewählt wird, wenn der gemessene Volumenstrom (Q) des an den Brühkammer-Einlass (35) zugeführten Brühwassers und/oder der gemessene Volumenstrom der aus dem Kammerauslass (37) austretenden Flüssigkeit einen vorab festgelegten oder festlegbaren Volumenstrom-Schwellenwert (Qmax) überschreitet bzw. überschreiten.

2. Verfahren nach Anspruch 1,
wobei die Verfahrensschritte b1) bis b2) wiederholt durchgeführt werden.

3. Verfahren nach Anspruch 2,
wobei das Einstellen der Modus-Einstellgrösse für den zweiten Brühwasser-Zuführungsmodus ein Umschalten zwischen dem kontinuierlichen Modus für den zweiten Brühwasser-Zuführungsmodus und dem Impulsmodus für den zweiten Brühwasser-Zuführungsmodus in Abhängigkeit von dem gemessenen Druck (P, P3) des an den Brühwassereinlass (35) zugeführten Brühwassers und/oder dem gemessenen Volumenstrom (Q, Q3) des zugeführten Brühwassers an den Brühkammer-Einlass (35) und/oder dem gemessenen Volumenstrom der aus dem Kammerauslass austretenden Flüssigkeit umfasst.

4. Verfahren nach einem der vorhergehenden Ansprüche,
wobei in die Brühwasser-Kenngrösse ein eingestellter Mahlgrad des Mahlgutes eingeht.

5. Verfahren nach einem der vorhergehenden Ansprüche, wobei in die Brühwasser-Kenngrösse eine eingestellte Kaffeegetränkeart eingeht.

6. Verfahren nach einem der vorhergehenden Ansprüche,
wobei die Modus-Einstellgrösse zusätzlich Impulseigenschaften für den zweiten Brühwasser-Zuführungsmodus definiert, die ein Impuls-Tastverhältnis oder einen Zeitverlauf des Impuls-Tastverhältnisses enthalten, und wobei das Einstellen der Modus-Einstellgrösse ein Einstellen der Impulseigenschaften für den Impulsmodus aufweist.

7. Verfahren nach Anspruch 6, wobei beim Einstellen der Impulseigenschaften für den Impulsmodus einer von folgenden Zeitverläufen vorgegeben wird:
- progressiver Zeitverlauf des Impuls-Tastverhältnisses;
- degressiver Zeitverlauf des Impuls-Tastverhältnisses;
- progressiver Zeitverlauf der Impuls-Pausendauer;
- degressiver Zeitverlauf der Impuls-Pausendauer;
- progressiver Zeitverlauf der Impuls-Einschaltzeit;
- degressiver Zeitverlauf der Impuls-Einschaltzeit;
- progressiv-degressiver Zeitverlauf des Impuls-Tastverhältnisses;
- progressiv-degressiver Zeitverlauf der Impuls-Pausendauer;
- degressiv-progressiver Zeitverlauf des Impuls-Tastverhältnisses;
- degressiv-progressiver Zeitverlauf der Impuls-Pausendauer.

8. Kaffeeautomat (10) zum Durchführen des Verfahrens nach einem der vorhergehenden Ansprüche, wobei der Kaffeeautomat (10) Folgendes aufweist:
- eine Brühkammer (36) zum Aufnehmen von Mahlgut, insbesondere von gemahlenem Kaffee, wobei die Brühkammer (36) einen Brühwassereinlass (35) und einen Kammerauslass (37) aufweist;
- eine Pumpe (23), vorzugsweise eine Schwingkolbenpumpe, zum Zuführen von Brühwasser zum Brühwassereinlass (35) der Brühkammer (36) unter einem Druck;
- eine Pumpensteuereinrichtung (50-1) zum Ansteuern der Pumpe (23); und
- mindestens eine Messeinrichtung (51, 52), die dazu ausgelegt ist, Messwerte für einen Druck (P, P3) des an den Brühwassereinlass (35) zugeführten Brühwassers am Brühwassereinlass (35) und/oder Messwerte für einen Volumenstrom (Q, Q3) des an den Brühkammer-Einlass (35) zugeführten Brühwassers und/oder Messwerte für einen Volumenstrom einer aus dem Kammerauslass (37) austretenden Flüssigkeit zu erfassen und erfasste Messwerte der Pumpensteuereinrichtung (50-1) zuzuführen,
wobei die Pumpensteuereinrichtung (50-1) dazu ausgebildet ist, die Pumpe (23) während eines ersten Zuführungszeitraums (ΔT1) und eines auf den ersten Zuführungszeitraum folgenden zweiten Zuführungszeitraums (ΔT2) derart anzusteuern, dass Brühwasser mittels der Pumpe (23) während des ersten Zuführungszeitraums (ΔT1) gemäss einem ersten Brühwasser-Zuführungsmodus und während des zweiten Zuführungszeitraums (ΔT2) gemäss einem zweiten Brühwasser-Zuführungsmodus zum Brühwassereinlass (35) zuführbar ist;
wobei die Pumpe (23) von der Pumpensteuereinrichtung (50-1) derart ansteuerbar ist, dass die Pumpe (23) im ersten Brühwasser-Zuführungsmodus das Brühwasser während des ersten Zuführungszeitraums (ΔT1) kontinuierlich zum Brühwassereinlass (35) zuführt und im zweiten Brühwasser-Zuführungsmodus das Brühwasser während des zweiten Zuführungszeitraums (ΔT2) wahlweise in einem kontinuierlichen Modus, in welchem das Brühwasser kontinuierlich an den Brühwassereinlass (35) zugeführt wird, oder in einem Impulsmodus, in welchem das Brühwasser impulsweise an den Brühwassereinlass (35) zugeführt wird, zuführt;
wobei die Pumpensteuereinrichtung (50-1) dazu ausgebildet ist, die Pumpe (23) während des zweiten Zuführungszeitraums (ΔT2) in Abhängigkeit von mindestens einem erfassten Messwert der Messeinrichtung (51, 52) derart anzusteuern, dass ein Zuführen des Brühwassers in Abhängigkeit von dem mindestens einen erfassten Messwert wahlweise im kontinuierlichen Modus oder im Impulsmodus gemäss einem der folgenden Fälle e) bis f) erfolgt:
e) falls der mindestens eine erfasste Messwert ein Messwert für den Druck (P, P3) des an den Brühwassereinlass (35) zugeführten Brühwassers am Brühwassereinlass (35) ist, erfolgt das Zuführen des Brühwassers im Impulsmodus, wenn der Messwert für den Druck (P, P3) grösser als ein vorab festgelegter oder festlegbarer Druck-Schwellenwert (Pmax) ist, und im kontinuierlichen Modus, wenn der Messwert für den Druck (P, P3) kleiner als ein vorab festgelegter oder festlegbarer Druck-Schwellenwert (Pmin) ist;
f) falls der mindestens eine erfasste Messwert ein Messwert für einen Volumenstrom (Q, Q3) des an den Brühkammer-Einlass (35) zugeführten Brühwassers oder ein Messwert für einen Volumenstrom der aus dem Kammerauslass (37) austretenden Flüssigkeit ist, erfolgt das Zuführen des Brühwassers im Impulsmodus, wenn der Messwert für den Volumenstrom (Q, Q3) kleiner als ein vorab festgelegter oder festlegbarer Volumenstrom-Schwellenwert (Qmin) ist, und im kontinuierlichen Modus, wenn der der Messwert für den Volumenstrom (Q, Q3) grösser als ein vorab festgelegter oder festlegbarer Volumenstrom-Schwellenwert (Qmax) ist.

9. Kaffeeautomat (10) nach Anspruch 8, wobei
die Pumpensteuereinrichtung (50-1) ausgebildet ist, die Pumpe (23) mit einem Impulssignal anzusteuern, welches mehrere aufeinanderfolgende Impulse enthält, wobei die Pumpe (23) durch Ansteuern mit einem der Impulse angeschaltet wird und in einer Impuls-Pause zwischen zwei aufeinanderfolgenden Impulsen jeweils ausgeschaltet wird, um das Zuführen des Brühwassers im Impulsmodus zu ermöglichen.

10. Kaffeeautomat (10) nach Anspruch 9, wobei
die Impuls-Pause zwischen zwei aufeinanderfolgenden Impulsen eine Dauer von 0.05 bis 2 Sekunden aufweist.

11. Kaffeeautomat (10) nach einem der Ansprüche 9 - 10, wobei das Impulssignal einen der folgenden Zeitverläufe aufweist:
- progressiver Zeitverlauf des Impuls-Tastverhältnisses;
- degressiver Zeitverlauf des Impuls-Tastverhältnisses;
- progressiver Zeitverlauf der Impuls-Pausendauer;
- degressiver Zeitverlauf der Impuls-Pausendauer;
- progressiver Zeitverlauf der Impuls-Einschaltzeit;
- degressiver Zeitverlauf der Impuls-Einschaltzeit;
- progressiv-degressiver Zeitverlauf des Impuls-Tastverhältnisses;
- progressiv-degressiver Zeitverlauf der Impuls-Pausendauer;
- degressiv-progressiver Zeitverlauf des Impuls-Tastverhältnisses;
- degressiv-progressiver Zeitverlauf der Impuls-Pausendauer.

12. Kaffeeautomat (10) nach einem der Ansprüche 8 - 11,
wobei der Kaffeeautomat (10) ein in Bezug auf den Mahlgrad manuell oder automatisch verstellbares Mahlwerk aufweist, und wobei eine Mahlgrad-Gebereinrichtung vorgesehen ist, welche dazu ausgebildet ist, den eingestellten Mahlgrad der Pumpensteuereinrichtung (50-1) zuzuführen.

## Claims

1. A method for generating a coffee beverage in a brewing device (30) of an automatic coffee machine (10),
wherein the brewing device (30) has a brewing chamber (36) for accommodating ground material, in particular ground coffee,
wherein the brewing chamber (36) has a brewing water inlet (35) and a chamber outlet (37),
wherein the method comprises the following method steps:
a) during a first supply time period (ΔT1): supplying pressurized brewing water at the brewing water inlet (35) according to a first brewing water supply mode, in which the brewing water is continuously supplied to the brewing water inlet (35);
b) during a second supply time period (ΔT2) :
b1) determining a brewing water parameter, which correlates with the volume flow (Q, Q3) and/or with the pressure (P, P3) of the brewing water supplied to the brewing water inlet (35), and setting a mode setting parameter for a second brewing water supply mode, by using the brewing water parameter;
b2) supplying brewing water at the brewing
water inlet (35) according to the second brewing water supply mode,
wherein the mode setting parameter defines at least one continuous mode for the second brewing water supply mode, in which the brewing water is continuously supplied to the brewing water inlet (35), and a pulse mode for the second brewing water supply mode, in which the brewing water is supplied to the brewing water inlet (35) in pulses, and
wherein the setting of the mode setting parameter for the second brewing water supply mode comprises at least one selection between the continuous mode for the second brewing water supply mode and the pulse mode for the second brewing water supply mode as a function of the brewing water parameter,
**characterized in that**
the at least one selection between the continuous mode for the second brewing water supply mode and the pulse mode for the second brewing water supply mode comprises at least one of the following steps c) to d):
c) measuring a pressure (P, P3) of the brewing water supplied to the brewing water inlet (35) at the brewing water inlet (35) and selecting the pulse mode or the continuous mode for the second brewing water supply mode as a function of the measured pressure (P, P3), wherein the pulse mode is selected, when the measured pressure (P, P3) at the brewing water inlet (35) exceeds a predetermined or predeterminable pressure threshold value (Pmax), and the continuous mode is selected, when the measured pressure (P, P3) at the brewing water inlet (35) falls below a predetermined or predeterminable pressure threshold value (Pmin); and/or
d) measuring a volume flow (Q, Q3) of the brewing water supplied to the brewing water inlet (35) and/or of a volume flow of a liquid, which escapes from the chamber outlet (37), and selecting the pulse mode or the continuous mode for the second brewing water supply mode as a function of the measured volume flow (Q, Q3) of the brewing water supplied to the brewing chamber inlet (35) and/or the measured volume flow of the liquid, which escapes from the chamber outlet (37), wherein the pulse mode is selected, when the measured volume flow (Q, Q3) of the brewing water supplied to the brewing chamber inlet (35) and/or the measured volume flow of the liquid, which escapes from the chamber outlet, falls below or fall below, respectively, a predetermined or predeterminable volume flow threshold value (Qmin), and the continuous mode is selected, when the measured volume flow (Q) of the brewing water supplied to the brewing water inlet (35) and/or the measured volume flow of the liquid, which escapes from the chamber outlet (37), exceeds or exceed, respectively, a predetermined or predeterminable volume flow threshold value (Qmax).

2. The method according to claim 1,
wherein the method steps b1) to b2) are carried out repeatedly.

3. The method according to claim 2,
wherein the setting of the mode setting parameter for the second brewing water supply mode comprises a switch-over between the continuous mode for the second brewing water supply mode and the pulse mode for the second brewing water supply mode as a function of the measured pressure (P, P3) of the brewing water supplied to the brewing water inlet (35) and/or the measured volume flow (Q, Q3) of the brewing water supplied to the brewing chamber inlet (35) and/or the measured volume flow of the liquid, which escapes from the chamber outlet.

4. The method according to one of the preceding claims,
wherein a set degree of grinding of the ground material is included in the brewing water parameter.

5. The method according to one of the preceding claims,
wherein a set type of coffee beverage is included in the brewing water parameter.

6. The method according to one of the preceding claims,
wherein the mode setting parameter additionally defines pulse properties for the second brewing water supply mode, which include a pulse duty factor or a course of time of the pulse duty factor, and wherein the setting of the mode setting parameter comprises a setting of the pulse properties for the pulse mode.

7. The method according to claim 6, wherein one of the following courses of time is provided upon setting the pulse properties for the pulse mode:
- progressive course of time of the pulse duty factor;
- degressive course of time of the pulse duty factor;
- progressive course of time of the pulse pause duration;
- degressive course of time of the pulse pause duration;
- progressive course of time of the pulse on-time;
- degressive course of time of the pulse on-time;
- progressive-degressive course of time of the pulse duty factor;
- progressive-degressive course of time of the pulse pause duration;
- degressive-progressive course of time of the pulse duty factor;
- degressive-progressive course of time of the pulse pause duration.

8. An automatic coffee machine (10) for implementing the method according to one of the preceding claims, wherein the automatic coffee machine (10) comprises:
- a brewing chamber (36) for accommodating ground material, in particular ground coffee, wherein the brewing chamber (36) has a brewing water inlet (35) and a chamber outlet (37);
- a pump (23), preferably a reciprocating plunger type pump, for supplying brewing water to the brewing water inlet (35) of the brewing chamber (36) at a pressure;
- a pump control device (50-1) for controlling the pump (23); and
- at least one measuring device (51, 52), which is designed to capture measuring values for a pressure (P, P3) of the brewing water supplied to the brewing water inlet (35) at the brewing water inlet (35) and/or measuring values for a volume flow (Q, Q3) of the brewing water supplied to the brewing chamber inlet (35) and/or measuring values for a volume flow of a liquid, which escapes from the chamber outlet (37), and to supply captured measuring values to the pump control device (50-1),
wherein the pump control device (50-1) is configured to control the pump (23) during a first supply time period (ΔT1) and during a second supply time period (ΔT2), which follows the first supply time period, in such a way that brewing water is configured to be supplied to the brewing water inlet (35) by means of the pump (23) during the first supply time period (ΔT1) according to a first brewing water supply mode and during the second supply time period (ΔT2) according to a second brewing water supply mode;
wherein the pump (23) is configured to be controlled by the pump control device (50-1) in such a way that the pump (23) continuously supplies the brewing water to the brewing water inlet (35) in the first brewing water supply mode during the first supplying time period (ΔT1), and supplies the brewing water during the second supply time period (ΔT2) either in a continuous mode, in which the brewing water is continuously supplied to the brewing water inlet (35), or in a pulse mode, in which the brewing water is supplied in pulses at the brewing water inlet (35);
wherein the pump control device (50-1) is configured to control the pump (23) during the second supply time period (ΔT2) as a function of at least one captured measuring value of the measuring device (51, 52) in such a way that a supply of the brewing water as a function of the at least one captured measuring value either takes place in the continuous mode or in the pulse mode according to one of the following cases e) to f):
e) if the at least one captured measuring value is a measuring value for the pressure (P, P3) of the brewing water at the brewing water inlet (35) supplied to the brewing water inlet (35), the brewing water is supplied in the pulse mode, when the measuring value for the pressure (P, P3) is larger than a predetermined or predeterminable pressure threshold value (Pmax), and in the continuous mode, when the measuring value for the pressure (P, P3) is smaller than a predetermined or predeterminable pressure threshold value (Pmin);
f) if the at least one captured measuring value is a measuring value for a volume flow (Q, Q3) of the brewing water supplied to the brewing chamber inlet (35) or a measuring value for a volume flow of the liquid, which escapes from the chamber outlet (37), the brewing water is supplied in the pulse mode, when the measuring value for the volume flow (Q, Q3) is smaller than a predetermined or predeterminable volume flow threshold value (Qmin), and in the continuous mode, when the measuring value for the volume flow (Q, Q3) is larger than a predetermined or predeterminable volume flow threshold value (Qmax).

9. The automatic coffee machine (10) according to claim 8, wherein
the pump control device (50-1) is configured to control the pump (23) with a pulse signal, which includes a plurality of consecutive pulses, wherein the pump (23) is turned on by controlling with one of the pulses, and is in each case turned off in a pulse pause between two consecutive pulses, in order to make it possible to supply the brewing water in the pulse mode.

10. The automatic coffee machine (10) according to claim 9, wherein
the pulse pause between two consecutive pulses has a duration of between 0.05 and 2 seconds.

11. The automatic coffee machine (10) according to one of claims 9 - 10, wherein the pulse signal has one of the following courses of time:
- progressive course of time of the pulse duty factor;
- degressive course of time of the pulse duty factor;
- progressive course of time of the pulse pause duration;
- degressive course of time of the pulse pause duration;
- progressive course of time of the pulse on-time;
- degressive course of time of the pulse on-time;
- progressive-degressive course of time of the pulse duty factor;
- progressive-degressive course of time of the pulse pause duration;
- degressive-progressive course of time of the pulse duty factor;
- degressive-progressive course of time of the pulse pause duration.

12. The automatic coffee machine (10) according to one of claims 8 - 11,
wherein the automatic coffee machine (10) includes a grinder, which is configured be adjusted manually or automatically with regard to the degree of grinding, and wherein provision is made for a degree of grinding sensor device, which is configured to supply the set degree of grinding to the pump control device (50-1).

## Revendications

1. Procédé destiné à produire une boisson à base de café dans un dispositif de percolation (30) d'une machine automatique à café (10),
sachant que le dispositif de percolation (30) comporte une chambre de percolation (36) pour recevoir du produit de mouture, notamment du café moulu,
sachant que la chambre de percolation (36) comporte une entrée d'eau de percolation (35) et une sortie de chambre (37),
sachant que le procédé comporte les étapes de procédé suivantes :
a) pendant une première période d'alimentation (ΔT1) : alimentation d'eau de percolation se trouvant sous pression à l'entrée d'eau de percolation (35) selon un premier mode d'alimentation d'eau de percolation dans lequel l'eau de percolation est acheminée en continu à l'entrée d'eau de percolation (35),
b) pendant une deuxième période d'alimentation (ΔT2) :
b1) détermination d'une grandeur caractéristique d'eau de percolation , qui est associée au débit volumétrique (Q, Q3) et/ou à la pression (P, P3) de l'eau de percolation acheminée à l'entrée d'eau de percolation (35) et réglage en utilisant la grandeur caractéristique d'eau de percolation, d'une grandeur de réglage de mode pour un deuxième mode d'alimentation d'eau de percolation,
b2) alimentation d'eau de percolation à l'entrée d'eau de percolation (35) selon le deuxième mode d'alimentation d'eau de percolation,
sachant que la grandeur de réglage de mode définit au moins un mode continu pour le deuxième mode d'alimentation d'eau de percolation, dans lequel l'eau de percolation est acheminée en continu à l'entrée d'eau de percolation (35) et un mode d'impulsion pour le deuxième mode d'alimentation d'eau de percolation, dans lequel l'eau de percolation est acheminée par impulsions à l'entrée d'eau de percolation (35), et sachant que le réglage de la grandeur de réglage de mode pour le deuxième mode d'alimentation d'eau de percolation comprend au moins une sélection entre le mode continu pour le deuxième mode d'alimentation d'eau de percolation et le mode par impulsions pour le deuxième mode d'alimentation d'eau de percolation en fonction de la grandeur caractéristique d'eau de percolation,
**caractérisé en ce qu'**
au moins une sélection entre le mode continu pour le deuxième mode d'alimentation d'eau de percolation et le mode par impulsions pour le deuxième mode d'alimentation d'eau de percolation comprend au moins une des étapes suivantes c) à d) :
c) mesure d'une pression (P, P3) à l'entrée d'eau de percolation (35) de l'eau de percolation acheminée à l'entrée d'eau de percolation (35) et sélection du mode par impulsions ou du mode continu pour le deuxième mode d'alimentation d'eau de percolation en fonction de la pression mesurée (P, P3), sachant que le mode par impulsions est choisi, si la pression mesurée (P, P3) à l'entrée d'eau de percolation (35) dépasse une valeur seuil de pression (Pmax) définie ou pouvant être définie préalablement et le mode continu est choisi, si la pression mesurée (P, P3) à l'entrée d'eau de percolation (35) est inférieure à une valeur seuil de pression (Pmin) définie ou pouvant être définie préalablement, et/ou
d) mesure d'un débit volumétrique (Q, Q3) de l'eau de percolation acheminée à l'entrée d'eau de percolation (35) et/ou d'un débit volumétrique d'un liquide sortant de la sortie de chambre (37) et sélection du mode par impulsions ou du mode continu pour le deuxième mode d'alimentation d'eau de percolation en fonction du débit volumétrique mesuré (Q, Q3) de l'eau de percolation acheminée à l'entrée de la chambre de percolation (35) et/ou du débit volumétrique mesuré du liquide sortant de la sortie de chambre (37), sachant que le mode par impulsions est choisi, si le débit volumétrique mesuré (Q, Q3) de l'eau de percolation acheminée à l'entrée de la chambre de percolation (35) et/ou le débit volumétrique mesuré du liquide sortant de la sortie de chambre est inférieur à une valeur seuil de débit volumétrique définie ou pouvant être définie préalablement (Qmin) et le mode continu est choisi, si le débit volumétrique mesuré (Q) de l'eau de percolation acheminée à l'entrée de la chambre de percolation (35) et/ou le débit volumétrique mesuré du liquide sortant de la sortie de chambre (37) dépasse une valeur seuil de débit volumétrique définie ou pouvant être définie préalablement (Qmax).

2. Procédé selon la revendication 1,
sachant que les étapes de procédé b1) à b2) sont effectuées de façon répétée.

3. Procédé selon la revendication 2,
sachant que le réglage de la grandeur de réglage de mode pour le deuxième mode d'alimentation d'eau de percolation comprend une inversion entre le mode continu pour le deuxième mode d'alimentation d'eau de percolation et le mode par impulsions pour le deuxième mode d'alimentation d'eau de percolation en fonction de la pression mesurée (P, P3) de l'eau de percolation acheminée à l'entrée d'eau de percolation (35) et/ou du débit volumétrique mesuré (Q, Q3) de l'eau de percolation acheminée à l'entrée d'eau de percolation (35) et/ou du débit volumétrique mesuré du liquide sortant de la sortie de chambre.

4. Procédé selon l'une quelconque des revendications précédentes,
sachant qu'un degré de mouture réglé du produit de mouture entre dans la grandeur caractéristique d'eau de percolation.

5. Procédé selon l'une quelconque des revendications précédentes,
sachant qu'un type réglé de boisson à base de café entre dans la grandeur caractéristique d'eau de percolation.

6. Procédé selon l'une quelconque des revendications précédentes,
sachant que la grandeur de réglage de mode définit en plus des propriétés d'impulsion pour le deuxième mode d'alimentation d'eau de percolation, qui contiennent un rapport cyclique d'impulsions ou un profil temporel du rapport cyclique d'impulsions et sachant que le réglage de la grandeur de réglage de mode comporte un réglage des propriétés d'impulsion pour le mode par impulsions.

7. Procédé selon la revendication 6, sachant que lors du réglage des propriétés d'impulsion pour le mode par impulsion, un des profils temporels suivants est prédéfini :
- profil temporel progressif du rapport cyclique d' impulsions,
- profil temporel dégressif du rapport cyclique d' impulsions,
- profil temporel progressif de la durée d'intervalle entre impulsions,
- profil temporel dégressif de la durée d'intervalle entre impulsions,
- profil temporel progressif du temps de mise en marche par impulsion,
- profil temporel dégressif du temps de mise en marche par impulsion,
- profil temporel progressif-dégressif du rapport cyclique d'impulsions,
- profil temporel progressif-dégressif de la durée d'intervalle entre impulsions,
- profil temporel dégressif-progressif du rapport cyclique d'impulsions,
- profil temporel dégressif-progressif de la durée d'intervalle entre impulsions.

8. Machine automatique à café (10) destinée à exécuter le procédé selon l'une quelconque des revendications précédentes, sachant que la machine automatique à café (10) comporte les éléments suivants :
- une chambre de percolation (36) destinée à recevoir du produit de mouture, notamment du café moulu, sachant que la chambre de percolation (36) comporte une entrée d'eau de percolation (35) et une sortie de chambre (37),
- une pompe (23), de préférence une pompe à piston oscillant, pour acheminer de l'eau de percolation sous pression à l'entrée d'eau de percolation (35) de la chambre de percolation (36),
- un dispositif de commande de pompe (50-1) pour commander la pompe (23), et
- au moins un dispositif de mesure (51, 52), qui est conçu pour saisir des valeurs de mesure pour une pression (P, P3) de l'eau de percolation acheminée à l'entrée d'eau de percolation (35) à l'entrée d'eau de percolation (35) et/ou des valeurs de mesure pour un débit volumétrique (Q, Q3) de l'eau de percolation acheminée à l'entrée d'eau de percolation (35) et/ou des valeurs de mesure pour un débit volumétrique d'un liquide sortant de la sortie de chambre (37) et attribuer les valeurs de mesure saisies au dispositif de commande de pompe (50-1),
sachant que le dispositif de commande de pompe (50-1) est constitué pour commander la pompe (23) pendant une première période d'alimentation (ΔT1) et une deuxième période d'alimentation (ΔT2) suivant la première période d'alimentation de telle manière que l'eau de percolation puisse être acheminée à l'entrée d'eau de percolation (35) au moyen de la pompe (23) pendant la première période d'alimentation (ΔT1) selon un premier mode d'alimentation d'eau de percolation et pendant la deuxième période d'alimentation d'eau de percolation (ΔT2) selon un deuxième mode d'alimentation d'eau de percolation,
sachant que la pompe (23) peut être commandée par le dispositif de commande de la pompe (50-1) de telle manière que la pompe (23) achemine en continu dans le premier mode d'alimentation d'eau de percolation, l'eau de percolation pendant la première période d'alimentation (ΔT1) à l'entrée d'eau de percolation (35) et achemine dans le deuxième mode d'alimentation d'eau de percolation, l'eau de percolation pendant la deuxième période d'alimentation (ΔT2) facultativement dans un mode continu, dans lequel l'eau de percolation est acheminée en continu à l'entrée d'eau de percolation (35) ou dans un mode par impulsions, dans lequel l'eau de percolation est acheminée par impulsions à l'entrée d'eau de percolation (35), sachant que le dispositif de commande de la pompe (50-1) est constitué de manière à commander la pompe (23) pendant la deuxième période d'alimentation (ΔT2) en fonction d'au moins une valeur de mesure saisie du dispositif de mesure (51, 52) de telle manière qu'un acheminement de l'eau de percolation a lieu en fonction d'au moins une valeur de mesure saisie facultativement en mode continu ou en mode par impulsions selon l'un quelconque des cas e) à f) suivants :
e) au cas où au moins une valeur de mesure saisie est une valeur de mesure pour la pression (P, P3) à l'entrée d'eau de percolation (35) de l'eau de percolation acheminée à l'entrée d'eau de percolation (35), l'alimentation de l'eau de percolation a lieu en mode par impulsions, si la valeur de mesure pour la pression (P, P3) est plus grande qu'une valeur seuil de pression (Pmax) définie ou pouvant être définie préalablement et en mode continu, si la valeur de mesure pour la pression (P, P3) est plus petite qu'une valeur seuil de pression (Pmin) définie ou pouvant être définie préalablement,
f) au cas où au moins une valeur de mesure saisie est une valeur de mesure pour un débit volumétrique (Q, Q3) de l'eau de percolation acheminée à l'entrée d'eau de percolation (35) ou une valeur de mesure pour un débit volumétrique du liquide sortant de la sortie de chambre (37), l'alimentation de l'eau de percolation a lieu en mode par impulsions, si la valeur de mesure pour le débit volumétrique (Q, Q3) est plus petite qu'une valeur seuil de débit volumétrique (Qmin) définie ou pouvant être définie préalablement et en mode continu, si la valeur de mesure pour le débit volumétrique (Q, Q3) est plus grande qu'une valeur seuil de débit volumétrique (Qmax) définie ou pouvant être définie préalablement.

9. Machine automatique à café (10) selon la revendication 8, sachant que le dispositif de commande de la pompe (50-1) est constitué pour commander la pompe (23) avec un signal d'impulsion, lequel contient plusieurs impulsions successives, sachant que la pompe (23) est mise en marche en activant avec une des impulsions et est respectivement arrêtée dans une durée d'intervalle entre impulsions entre deux impulsions successives pour permettre l'alimentation d'eau de percolation en mode par impulsions.

10. Machine automatique à café (10) selon la revendication 9, sachant que la durée d'intervalle entre impulsions entre deux impulsions successives comporte une durée de 0,05 à 2 secondes.

11. Machine automatique à café (10) selon l'une quelconque des revendications 9 - 10, sachant que le signal d'impulsion comporte un des profils temporels suivants :
- profil temporel progressif du rapport cyclique d' impulsions,
- profil temporel dégressif du rapport cyclique d' impulsions,
- profil temporel progressif de la durée d'intervalle entre impulsions,
- profil temporel dégressif de la durée d'intervalles entre impulsions,
- profil temporel progressif du temps de mise en marche par impulsion,
- profil temporel dégressif du temps de mise en marche par impulsion,
- profil temporel progressif-dégressif du rapport cyclique d'impulsions,
- profil temporel progressif-dégressif de la durée d'intervalle entre impulsions,
- profil temporel dégressif-progressif du rapport cyclique d'impulsions,
- profil temporel dégressif-progressif de la durée d'intervalle entre impulsions.

12. Machine automatique à café (10) selon l'une quelconque des revendications 8 - 11, sachant que la machine automatique à café (10) comporte un mécanisme de mouture réglable de façon manuelle ou automatique eu égard au degré de mouture et sachant qu'un dispositif de détection de degré de mouture est prévu, lequel est constitué pour attribuer le degré de mouture réglé au système de commande de la pompe (50-1).
